# EUROPEAN PATENT APPLICATION

(11) **EP 2 437 110 A1**
(43) Date of publication of application: **04.04.2012**
(21) Application number: 10780179.7
(22) Date of filing: 11.03.2010
(51) Int. Cl.: G02F 1/1343, G02F 1/1337, G02F 1/1368

(54) **LIQUID CRYSTAL PANEL AND LIQUID CRYSTAL DISPLAY DEVICE**

(30) Priority: 29.05.2009 JP 2009131557
(71) Applicant: Sharp Kabushiki Kaisha, Osaka-shi, Osaka 545-8522 (JP)
(72) Inventor: ISHIHARA, Shoichi, Osaka-shi Osaka 545-8522 (JP); MURATA, Mtsuhiro, Osaka-shi Osaka 545-8522 (JP); SAKURAI, Takehisa, Osaka-shi Osaka 545-8522 (JP); OHTAKE, Tadashi, Osaka-shi Osaka 545-8522 (JP); KOZAKI, Shuichi, Osaka-shi Osaka 545-8522 (JP)
(74) Representative: Müller - Hoffmann & Partner
(86) International application number: PCT/JP2010/001756
(87) International publication number: WO 2010/137217

(57) **Abstract**

A liquid crystal panel (2) includes: a p-type liquid crystal material sandwiched between a pair of substrates (40, 20); and pixel electrodes (13), each formed from a comb electrode, and a common electrode (14) both provided to the substrate (40). A p-type liquid crystal material is aligned in a direction perpendicular to substrate surfaces while no electric field is applied. The comb electrodes each have an electrode width of not more than 5 µm and an electrode spacing of not more than 15 µm. The pixel electrode (13) and the common electrode (14) serve to apply to the p-type liquid crystal material an electric field parallel to the substrate surface. A voltage of not less than 7 V is applied between the pixel electrode (13) and the common electrode (14) when the liquid crystal panel is driven. The p-type liquid crystal material has, in a range from 0.9 to 2.5, a product of a dielectric anisotropy Δε and a refractive index anisotropy Δn.

## Description

### Technical Field

The present invention relates to a liquid crystal panel and a liquid crystal display device. In particular, the present invention relates to a liquid crystal panel and a liquid crystal display device each of which controls light transmission by causing a bend distortion in a liquid crystal layer by means of a voltage application.

### Background Art

Liquid crystal display devices are characterized by their small thickness, light weight, and low power consumption, and are widely used in various fields. Display performance of liquid crystal display devices has been improving drastically year by year. As a result, the display performance of liquid crystal display devices has now become superior to that of CRT (cathode ray tube) display devices.

A display mode of a liquid crystal display device is determined by how liquid crystal molecules are aligned in a liquid crystal cell. Various display modes are known for liquid crystal display devices. One of such various display modes is a display mode in which an electric field (so-called "lateral electric field") parallel to a surface of a substrate is applied, with use of comb electrodes, to a vertical alignment cell in which liquid crystal molecules are aligned in a direction perpendicular to the substrate when no voltage is applied.

In this display mode, while a high contrast due to a vertical alignment is maintained, driving is carried out by means of a lateral electric field so that an alignment direction of liquid crystal molecules is defined. As such, the display mode has an excellent viewing angle characteristic.

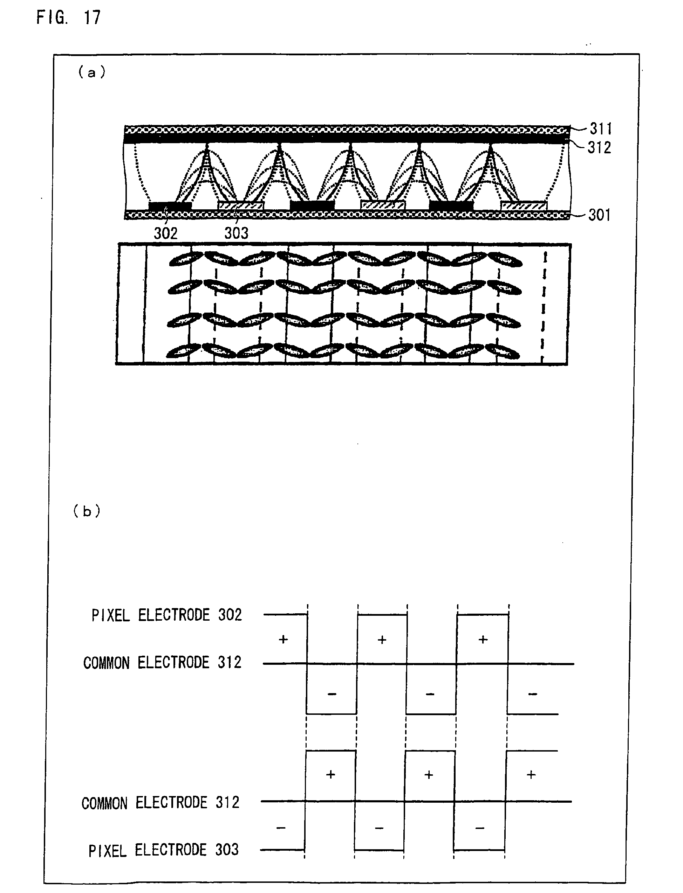

Non Patent Literature 1, for example, discloses a display mode called "VA-IPS mode" as an example of the above display mode. Non Patent Literature 1 discloses that in the VA-IPS mode, a color shift due to a viewing angle variation is small.
(a) of Fig. 17 is a cross-sectional view schematically illustrating an arrangement of a substantial part of a liquid crystal cell using the VA-IPS mode disclosed in Non Patent Literature 1. (b) of Fig. 17 is a timing chart illustrating how a voltage is applied to each electrode illustrated in (a) of Fig. 17.

As illustrated in (a) of Fig. 17, the liquid crystal cell disclosed in Non Patent Literature 1 includes: pixel electrodes 302 and 303, each in a form of a comb electrode, provided on a substrate 301; and an allover common electrode 312 provided on a substrate 311 facing the substrate 301. As illustrated in (b) of Fig. 17, according to Non Patent Literature 1, a lateral electric field is applied to the liquid crystal cell by applying to the pixel electrodes 302 and 303 voltages which are opposite to each other in phase.

### Citation list

### Non Patent Literature 1

In Young Cho, Sung Min kim, Seong Jin Hwang, Woo II Kim, Mi Young Kim, Jong Ho Son, Jae Jin Ryu, Kyeong hyeon Kim, and Seung Hee Lee, "New Vertical Alignment Liquid Crystal Device with Fast response Time and Small Color Shift", IDRC No.11.2, 2008, p.246-248.

### Summary of Invention

### Technical Problem

The above display mode, in which a lateral electric field is applied to a vertical alignment cell, has a problem that although the display mode achieves a high contrast and an excellent viewing angle characteristic due to the vertical alignment as described above, the display mode is low in light transmittance.

As such, the display mode has not yet been put to practical use in a liquid crystal panel or a liquid crystal display device.

The present invention has been accomplished in view of the above problem. It is an object of the present invention to provide a liquid crystal panel and a liquid crystal display device each of which can achieve a light transmittance sufficient for practical use while operating in a display mode in which a lateral electric field is applied to a vertical alignment cell as described above.

### Solution to Problem

Under the above circumstances, the inventors of the present invention have found that by changing a panel configuration and physical properties of a liquid crystal material to be used, it is possible to (i) unconstrainedly control a degree of a bend orientation (i.e., a degree of bend in an orientation of p-type liquid crystal molecules in a bend orientation) and, by thus controlling the degree of a bend orientation, (ii) obtain a practical light transmittance.

In order to solve the above problem, a liquid crystal panel of the present invention includes: a liquid crystal material sandwiched between a pair of substrates; and a plurality of electrodes which include comb electrodes and which cause an electric field parallel to substrate surfaces to be applied to the liquid crystal material, the liquid crystal material including a p-type liquid crystal material, the p-type liquid crystal material being oriented in a direction perpendicular to the substrate surfaces while no electric field is applied, the comb electrodes each having an electrode width of not more than 5 µm and an electrode spacing of not more than 15 µm, while the liquid crystal panel is being driven, voltages applied to the plurality of electrodes, which cause the electric field parallel to the substrate surfaces to be applied to the liquid crystal material, being different from each other by not less than 7 V between the plurality of electrodes, and the p-type liquid crystal material having a dielectric anisotropy Δε and a refractive index anisotropy Δn whose product falls in a range from 0.9 to 2.5.

In the present invention, the expression "causing an electric field parallel to substrate surfaces to be applied" indicates applying an electric field which at least has a component parallel to the substrate surfaces. Further, the expression "the p-type liquid crystal material being oriented in a direction perpendicular to the substrate surfaces" indicates that the p-type liquid crystal material at least has an alignment component perpendicular to the substrate surfaces. In other words, the terms "parallel" and "perpendicular" herein encompass "substantially parallel" and "substantially perpendicular", respectively.

As described above, the liquid crystal panel of the present invention employs a display mode in which a lateral electric field is applied to a vertical alignment cell in which liquid crystal molecules are aligned in a vertical alignment while the liquid crystal panel is being driven (i.e., while a voltage is applied). As such, the liquid crystal panel is advantageous in that it is possible to obtain (i) a high-speed response due to a bend orientation, (ii) a wide viewing angle due to a self-compensating alignment, and (iii) a high contrast due to a vertical alignment. The liquid crystal panel is further advantageous in that it has a simple structure and can be manufactured easily and inexpensively.

Although a liquid crystal panel using the above display mode has the above advantages, it has a problem of a low light transmittance in principle.

In view of the problem, according to the present invention, it is possible, in the display mode in which a lateral electric field is applied to a vertical alignment cell as described above, to (i) achieve a practical light transmittance of more than 60% as described above and (ii) use a liquid crystal material having a high dielectric anisotropy Δε, by changing the physical properties of the liquid crystal material and the panel configuration as described above.

As such, it is possible to (i) reduce a liquid crystal viscosity and thus (ii) reliably achieve a high-speed response. A viewing angle characteristic is impaired when the panel phase difference Δnd is increased. Thus, in practice, it is more desirable to increase Δε to an extent where reliability is not damaged than to increase Δn. According to the present invention, it is possible to improve a light transmittance and a response speed while maintaining a viewing angle characteristic and reliability.

It follows that with the above arrangement, it is possible to provide a practical liquid crystal panel which not only is higher in light transmittance than conventional liquid crystal panels, but also simultaneously achieves (i) a wide viewing angle equivalent to a viewing angle achieved in an MVA mode or an IPS mode, (ii) a high-speed response equivalent or even superior to a response achieved in an OCB mode, and (iii) a high contrast.

In order to solve the above problem, a liquid crystal display device of the present invention includes the liquid crystal panel of the present invention.

As such, according to the present invention, it is possible to provide a practical liquid crystal display device which not only is higher in light transmittance than conventional liquid crystal display devices, but also simultaneously achieves a high-speed response, a wide viewing angle, and a high contrast.

### Advantageous Effects of Invention

As described above, each of the liquid crystal panel and the liquid crystal display device of the present invention not only maintains a high contrast due to a vertical alignment, but also achieves, with use of a simple pixel configuration, a wide viewing angle and a high contrast by a driving using a so-called lateral electric field, which is parallel to the substrate surfaces. In addition, it is possible to achieve a practical bend orientation without an initial bend transition operation.

Further, it is possible to achieve a practical light transmittance of more than 60% and to use a liquid crystal material having a high dielectric anisotropy Δε, particularly in a case where (i) the electrodes for causing an electric field parallel to the substrate surface to be applied to the liquid crystal material include comb electrodes as described above, (ii) the comb electrodes each have an electrode width of not more than 5 µm and an electrode spacing of not more than 15 µm, (iii) when the liquid crystal panel is driven, voltages applied to the plurality of electrodes, which cause the electric field parallel to the substrate surfaces to be applied to the liquid crystal material, are different from each other by not less than 7 V between the plurality of electrodes, and (iv) the p-type liquid crystal material has, in a range from 0.9 to 2.5, a product (Δε·Δn) of a dielectric anisotropy Δε and a refractive index anisotropy Δn.

As such, it is possible to (i) reduce a liquid crystal viscosity and thus (ii) reliably achieve a high-speed response. Further, since it is possible to use a liquid crystal material having a high dielectric anisotropy Δε as described above, it is possible to improve a light transmittance and a response speed while maintaining a viewing angle characteristic and reliability.

### Brief Description of Drawings

Fig. 1

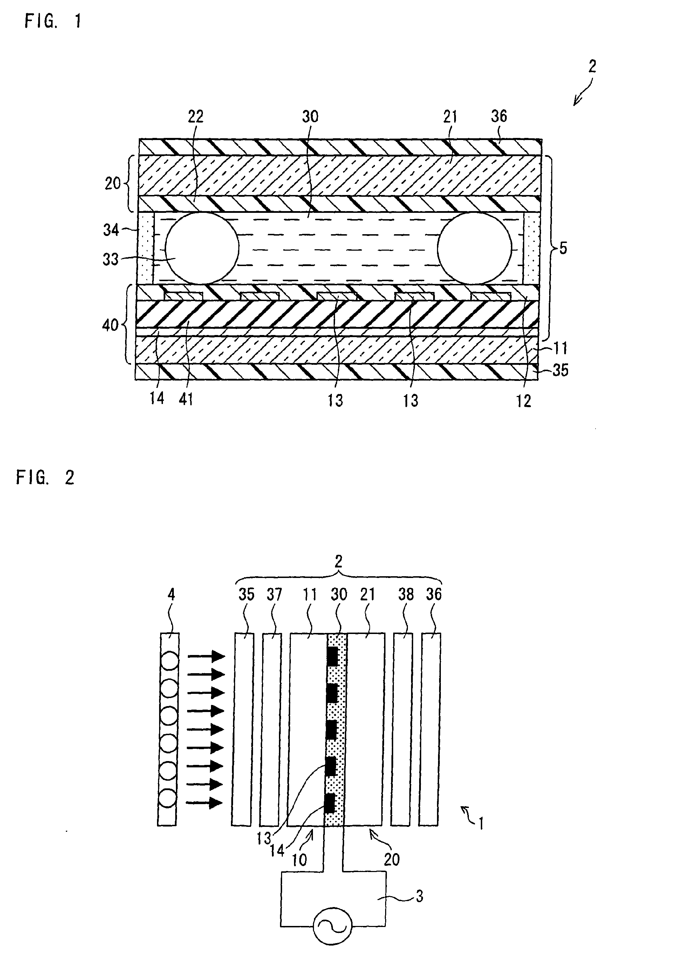

   Fig. 1 is an exploded perspective view schematically illustrating an arrangement of a substantial part of a liquid crystal panel in accordance with one embodiment of the present invention.
Fig. 2
   Fig. 2 is an exploded cross-sectional view schematically illustrating an example arrangement of a liquid crystal display device in accordance with the present invention.
Fig. 3

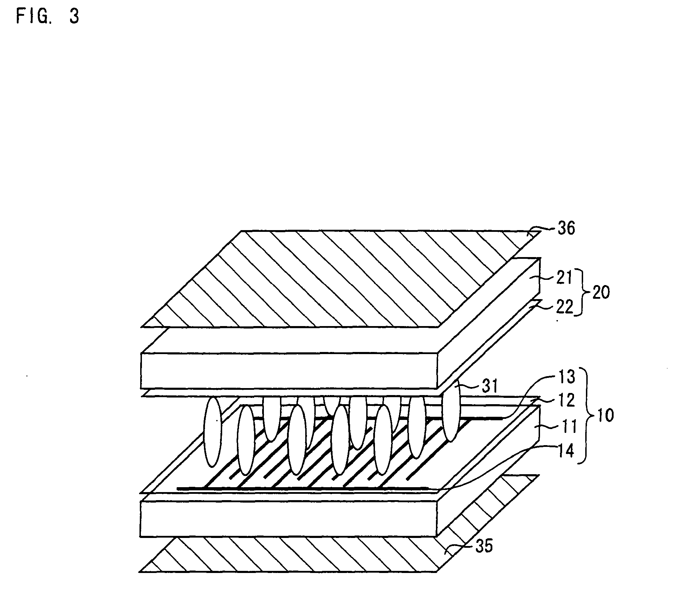

   Fig. 3 is an exploded perspective view schematically illustrating a basic configuration of a liquid crystal panel driven in a display mode of the present invention.
Fig. 4

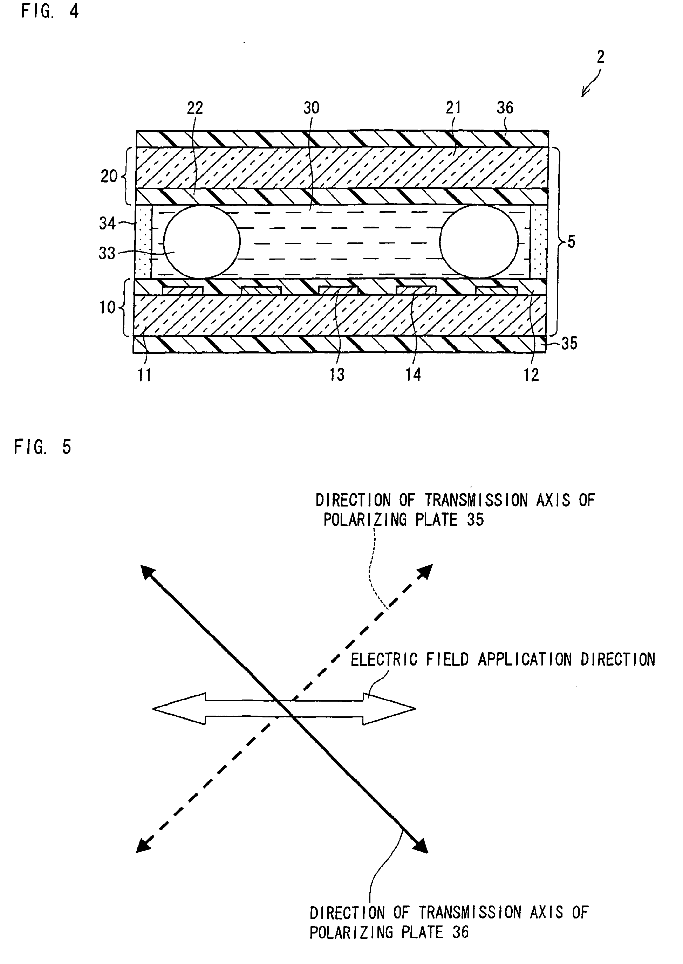

   Fig. 4 is a cross-sectional view schematically illustrating a basic configuration of the liquid crystal panel driven in the display mode of the present invention.
Fig. 5
   Fig. 5 is a diagram illustrating a relation between (i) directions of transmission axes of respective polarizing plates of the liquid crystal panel illustrated in Fig. 4 and (ii) an electric field application direction.
Fig. 6

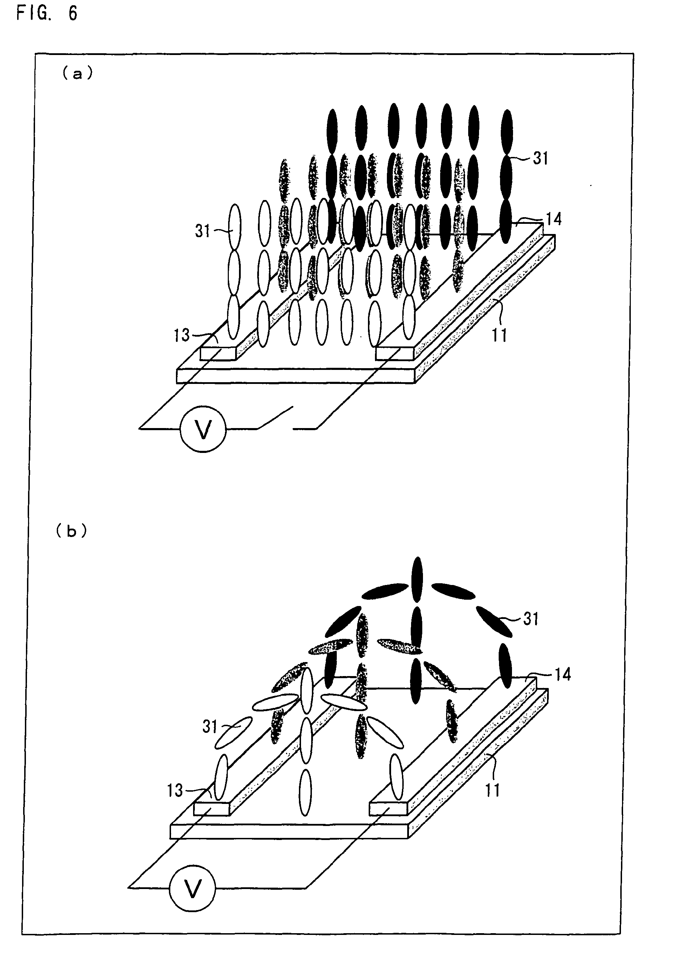

   Fig. 6 illustrates how p-type liquid crystal molecules in the liquid crystal panel illustrated in Fig. 4 are rotated, where (a) is a perspective view illustrating a substantial part of the liquid crystal panel observed while no electric field is applied, and (b) is a perspective view illustrating a substantial part of the liquid crystal panel observed when an electric field is applied.
Fig. 7

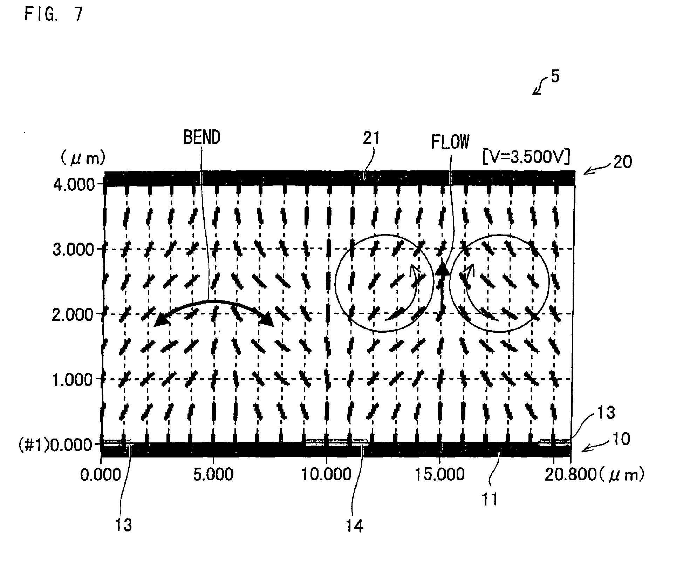

   Fig. 7 is a diagram illustrating an example director distribution for p-type liquid crystal molecules in a liquid crystal cell using the display mode of the present invention which director distribution is observed when a voltage of 3.5 V is applied to the liquid crystal cell.
Fig. 8

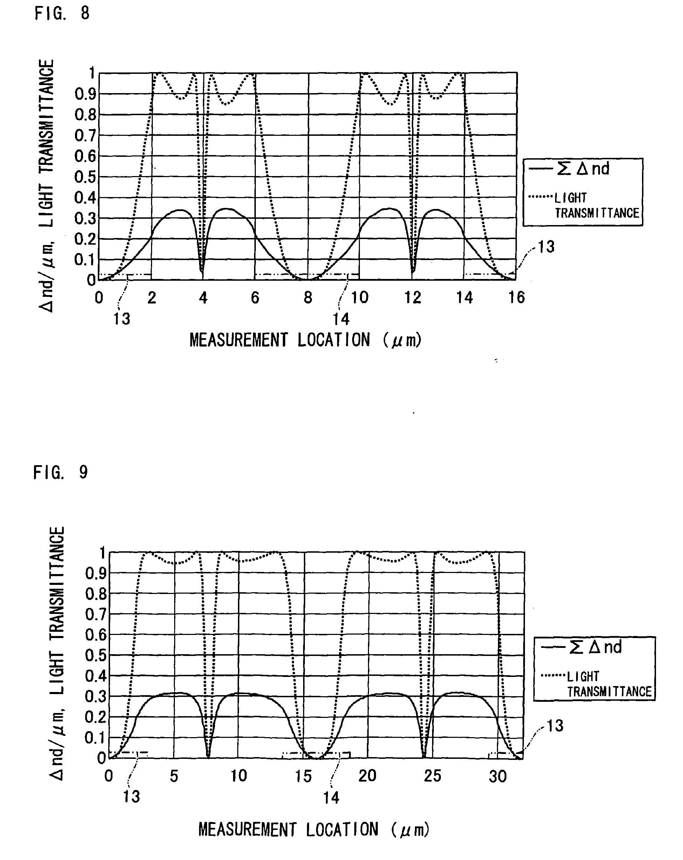

   Fig. 8 is a graph illustrating an example relation between a light transmittance distribution and a phase difference distribution in a liquid crystal cell using the display mode of the present invention.
Fig. 9
   Fig. 9 is a graph illustrating a light transmittance distribution and a phase difference distribution in a liquid crystal cell which differs from the liquid crystal cell of Fig. 8 in electrode spacing.
Fig. 10
   (a) is a cross-sectional view schematically illustrating an arrangement of a substantial part of a liquid crystal panel in accordance with another embodiment of the present invention, and (b) is a timing chart illustrating how a voltage is applied to each electrode illustrated in (a).
Fig. 11

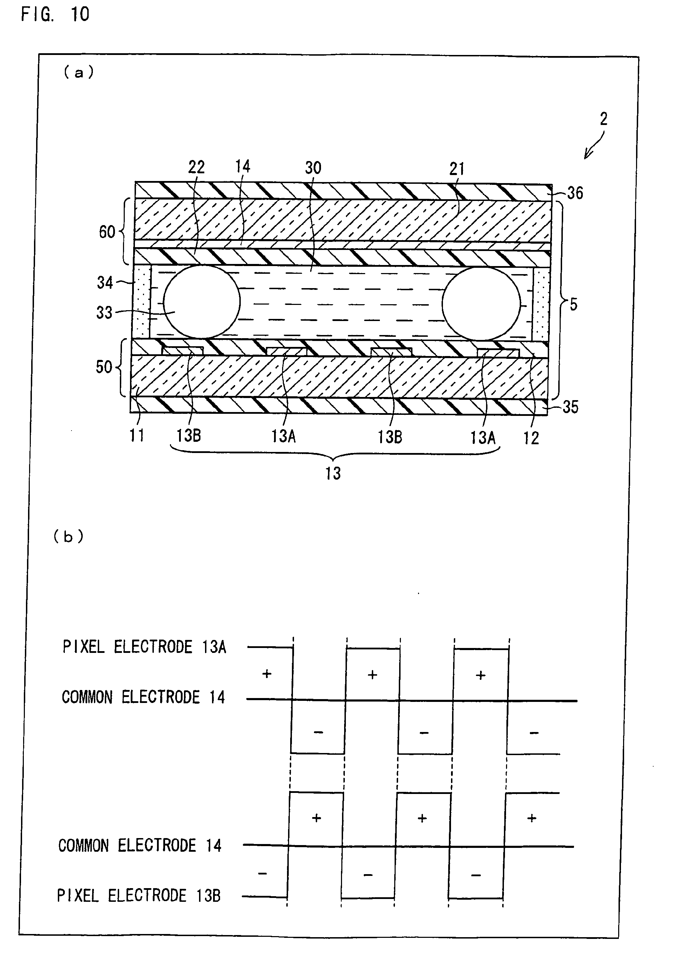

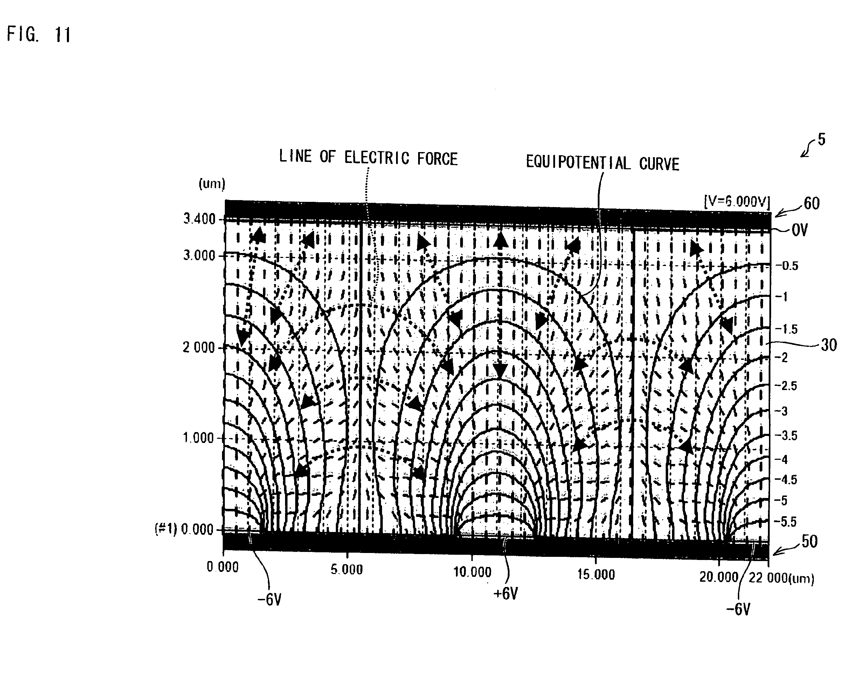

   Fig. 11 is a diagram illustrating a director distribution for p-type liquid crystal molecules in the liquid crystal cell and equipotential curves as observed when voltages of +6V and -6V are applied to the pixel electrodes illustrated in (a) and (b) of Fig. 10.
Fig. 12

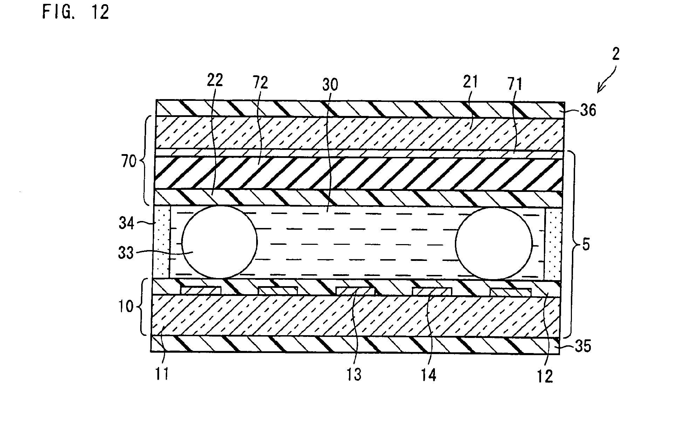

   Fig. 12 is a cross-sectional view schematically illustrating an arrangement of a substantial part of a liquid crystal panel in accordance with still another embodiment of the present invention.
Fig. 13

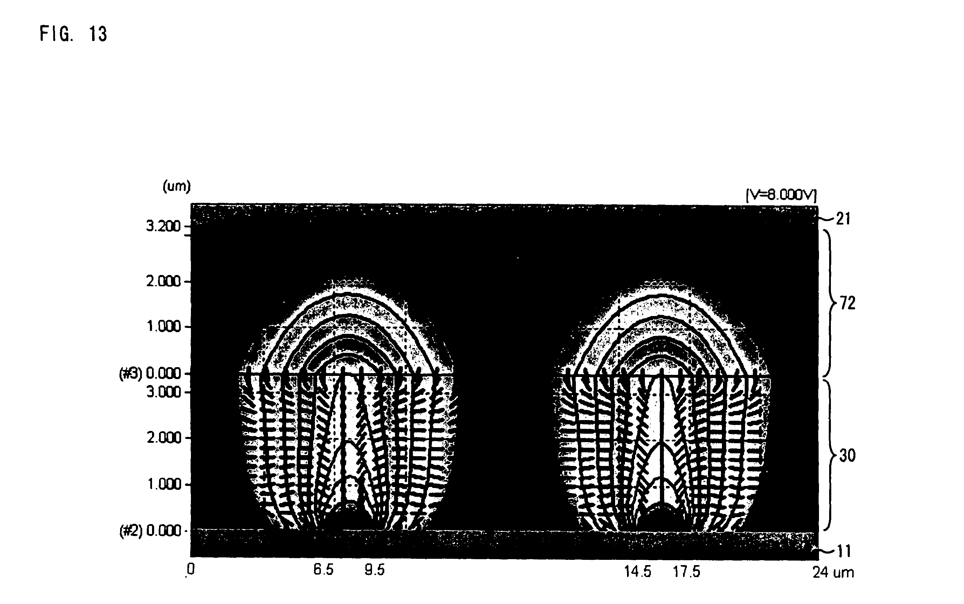

   Fig. 13 is a diagram illustrating an electric field distribution and a liquid crystal director distribution in a liquid crystal cell observed when a voltage of 8 V is applied to the liquid crystal panel produced in Example 4.
Fig. 14

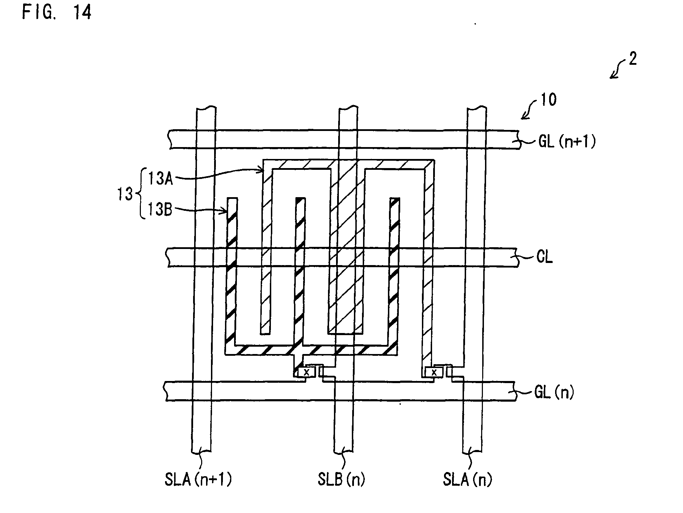

   Fig. 14 is a plan view schematically illustrating an arrangement of a single pixel in an electrode substrate for use in a liquid crystal panel in accordance with yet another embodiment of the present invention.
Fig. 15

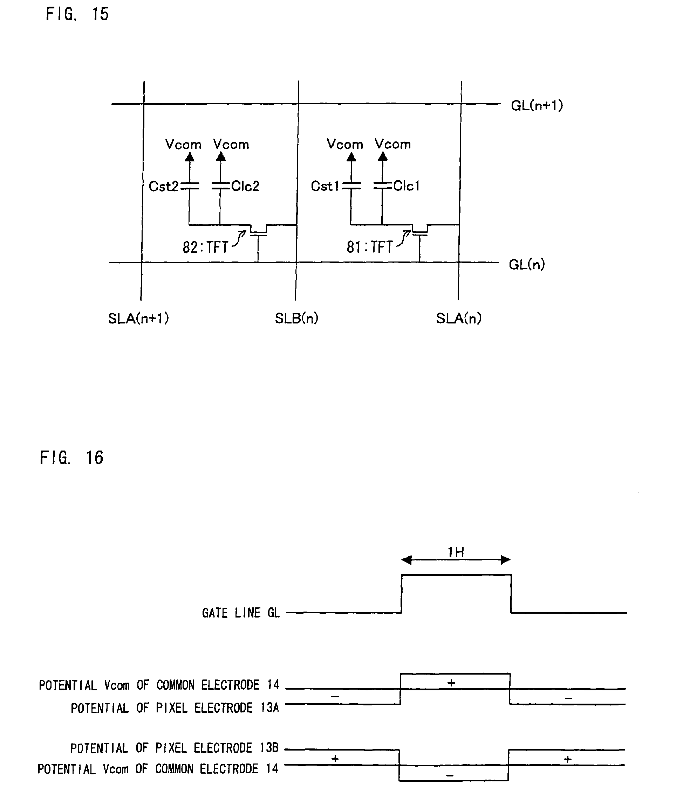

   Fig. 15 is an equivalent circuit diagram for electrodes illustrated in Fig. 14.
Fig. 16
   Fig. 16 is a timing chart illustrating how a voltage is applied to each of a pixel electrode, a gate line, and a common electrode all illustrated in Fig. 14.
Fig. 17
   (a) is a cross-sectional view schematically illustrating an arrangement of a liquid crystal cell using a VA-IPS mode disclosed in Non Patent Literature 1, and (b) is a timing chart illustrating how a voltage is applied to each electrode illustrated in (a).

### Description of Embodiments

The following description deals first with (i) a display mode for use in a liquid crystal panel and a liquid crystal display device of the present invention and (ii) a basic configuration of each of the liquid crystal panel and the liquid crystal display device.

The display mode used in the present invention is a mode (hereinafter referred to as "present mode") in which an arc-shaped (bent) liquid crystal orientation distribution is generated in a cell by applying an electric field (lateral electric field), parallel to substrate surfaces, to a vertical alignment cell via comb electrodes each having a comb-shaped arrangement.

Fig. 2 is an exploded cross-sectional view schematically illustrating an example arrangement of the liquid crystal display device in accordance with the present invention. Fig. 3 is an exploded perspective view schematically illustrating the basic configuration of the liquid crystal panel driven in the present mode. Fig. 4 is a cross-sectional view schematically illustrating the basic configuration of the liquid crystal panel driven in the present mode.

It is assumed in the following description that a substrate provided on a display surface side (a substrate on a side where a viewer is present) is an upper substrate and the other substrate is a lower substrate.

As illustrated in Fig. 2, the liquid crystal display device 1 of the present invention includes: a liquid crystal panel 2; a driving circuit 3; and a backlight 4 (illumination device). The driving circuit 3 and the backlight 4 each have an arrangement which is identical to a conventional arrangement. The arrangements of the driving circuit 3 and the backlight 4 are therefore not described here.

As illustrated in Figs. 2 through 4, the liquid crystal panel 2 includes a pair of substrates 10 and 20 provided as an electrode substrate (array substrate; element substrate) and a counter substrate, respectively, so as to face each other. A liquid crystal layer 30 including a p-type liquid crystal material is sandwiched, as a display medium layer, between the pair of substrates 10 and 20.

Each of the pair of substrates 10 and 20 includes an insulating substrate. At least one of the pair of substrates 10 and 20 includes a transparent substrate such as a glass substrate as the insulating substrate. It is assumed in the description below that the pair of substrates 10 and 20 include glass substrates 11 and 21, respectively, as the insulating substrate. The present embodiment is, however, not limited to this.

As illustrated in Figs. 3 and 4, one surface of the substrate 10 which surface faces the substrate 20 includes an alignment film 12, whereas one surface of the substrate 20 which surface faces the substrate 10 includes an alignment film 22. The alignment films 12 and 22 are each referred to as a vertical alignment film.

The vertical alignment film causes liquid crystal molecules in the liquid crystal layer to align in a direction perpendicular to the substrate surfaces while no electric field is applied. Note that the term "perpendicular" herein encompasses "substantially perpendicular".

With the above arrangement, p-type liquid crystal molecules 31 in the liquid crystal layer 30 exhibit a homeotropic alignment while no voltage is applied (see Fig. 3). The p-type liquid crystal molecules 31 continuously change in state from the homeotropic orientation to a bend orientation in response to a voltage application. As such, the liquid crystal layer 30 constantly exhibits the bend orientation in normal driving, and a high-speed response can thus be achieved in a transition from one gray scale level to another.

One of the substrates 10 and 20 includes electric field application means for applying an electric field to the liquid crystal layer 30 as described above. This electric field is parallel to the substrate surfaces, and is referred to as a lateral electric field. Note that the term "parallel" herein encompasses "substantially parallel".

The substrates 10 and 20 include the glass substrates 11 and 21, respectively, as described above. A pixel electrode 13 and a common electrode 14 are provided on the glass substrate 11 of the substrate 10 so as to serve as the electric field application means for applying a lateral electric field to the liquid crystal layer 30. At least one of the pixel electrode 13 and the common electrode 14 has a comb-shaped configuration, as described above. The pixel electrode 13 and the common electrode 14 can each be made of a transparent electrode material such as ITO (indium tin oxide) or a metal such as aluminum. The pixel electrode 13 and the common electrode 14 are not limited to a particular material.

The alignment film 12 is provided so as to cover the pixel electrode 13 and the common electrode 14. Note that the alignment films 12 and 22 are not limited to a particular material and a particular forming method. The alignment films 12 and 22 can each be formed by, for example, applying onto the pixel electrode 13 and the common electrode 14 a known alignment film material having a vertical alignment controlling function.

Note that an array substrate (such as a TFT array substrate) and a color filter substrate, for example, can be used as the electrode substrate and the counter substrate, respectively. The present embodiment is, however, not limited to these.

As illustrated in Figs. 2 to 4, a polarizing plate 35 is provided on a surface of the substrate 10 which surface is opposite to the surface facing the liquid crystal layer 30, whereas a polarizing plate 36 is provided on a surface of the substrate 20 which surface is opposite to the surface facing the liquid crystal layer 30.

According to need, a wave plate 37 is provided between the substrate 10 and the polarizer 35, and a wave plate 38 is provided between the substrate 20 and the polarizer 36 (see Fig. 2). Note that the wave plate 37 or 38 can be provided only on one side of the liquid crystal panel 2. Further, the wave plates 37 and/or 38 are dispensable in a case of a display device utilizing only light transmitted from a front surface.

A liquid crystal cell 5 of the liquid crystal panel 2 is formed by, for example, (i) combining the substrate 10 to the substrate 20 via a spacer 33 by use of a sealing agent 34 and (ii) filling and sealing a medium, containing the p-type liquid crystal material as a liquid crystal material, in a space between the substrates 10 and 20 (see Fig. 4). An example of the p-type liquid crystal material is a p-type nematic liquid crystal material.

The liquid crystal panel 2 is formed by combining, to the liquid crystal cell 5, (i) the wave plates 37 and 38 and (ii) the polarizers 35 and 36 as described above.

Fig. 5 illustrates a relation between transmission axis directions of the respective polarizers 35 and 36 and an electric field application direction. As illustrated in Fig. 5, the polarizers 35 and 36 are provided so that (i) the transmission axis directions of the respective polarizers 35 and 36 are orthogonal to each other and (ii) each of the transmission axis directions is at an angle of 45 degrees with the electric field application direction.

Next, the present mode is described below.

(a) and (b) of Fig. 6 illustrate, with use of directions of liquid crystal directors, how the p-type liquid crystal molecules 31 are rotated, in the present mode, in response to an electric field application. (a) of Fig. 6 is a perspective view illustrating a substantial part of the liquid crystal panel 2 observed while no electric field is applied. (b) of Fig. 6 is a perspective view illustrating a substantial part of the liquid crystal panel 2 observed when an electric field is applied.

In the present mode, an electric field parallel to the substrate surfaces is applied by use of the comb electrodes as described above. The p-type liquid crystal molecules 31 are oriented in accordance with (i) an electric field strength distribution in the liquid crystal cell 5 and (ii) a binding force exerted on an interface.

In the present mode, the p-type liquid crystal molecules 31 are aligned in a direction perpendicular to the substrate surfaces while no electric field is applied (see (a) of Fig. 6). In contrast, while an electric field is being applied, lines of electric force between the pixel electrode 13 and the common electrode 14 are bent in a semicircle. The p-type liquid crystal molecules 31 are consequently oriented in an arc in a bend orientation in a substrate thickness direction (see (b) of Fig. 6). As a result, the p-type liquid crystal molecules 31 show birefringence with respect to light traveling in the direction perpendicular to the substrate surfaces.

In the present mode, the p-type liquid crystal molecules 31 are driven in response to a lateral electric field as described above, while a high contrast due to the vertical alignment is being maintained, so that an alignment direction of the p-type liquid crystal molecules 31 is controlled. As such, it is possible to achieve an excellent viewing angle characteristic with use of a simple pixel configuration, without an alignment control using a rib as in an MVA mode.

Further, the p-type liquid crystal material is used and is driven in response to the lateral electric field in a vertical alignment mode as described above. As such, a bent (arc-shaped) electric field is formed in response to the lateral electric field. Therefore, two domains are formed whose director directions are different from each other by 180 degrees. This allows a wide viewing angle to be achieved.

The present mode thus has an advantage that it is possible to obtain (i) a high-speed response due to a bend orientation, (ii) a wide viewing angle caused by a self-compensating alignment, and (iii) a high contrast caused by the vertical alignment. The present mode further has an advantage that it is possible to easily and inexpensively manufacture a liquid crystal panel and a liquid crystal display device each of which has a simple configuration.

However, dark lines are displayed, due to a principle of the present mode, (i) in a central part of each of the comb electrodes and (ii) between the two comb electrodes. As such, a light transmittance of the entire liquid crystal cell 5 is not high.

Fig. 7 illustrates an example director distribution of the p-type liquid crystal molecules 31 in the liquid crystal cell 5 in the present mode, while a voltage of 3.5 V is being applied to the liquid crystal cell 5.

As is clear from Fig. 7, a degree of the bend orientation is larger, i.e., an optical modulation factor is larger, in a region in which no comb electrode (i.e., the pixel electrode 13 and the common electrode 14) is provided than in a region located above the comb electrodes.

As illustrated in (b) of Fig. 6 and Fig. 7, the present mode greatly differs from other modes, such as an IPS mode and an OCB mode, in which an electric field is applied in a direction parallel to substrate surfaces, in that the p-type liquid crystal molecules 31 which are located (i) in the central part of each of the comb electrodes and (ii) in a center of a space between the comb electrodes are constantly aligned in the direction perpendicular to the substrate surfaces. As such, according to the present mode, light is not transmitted (i) in the central part of each of the comb electrodes and (ii) in the center of the space between the comb electrodes.

Fig. 8 illustrates how light transmittance and phase difference distribute in a liquid crystal cell 5 while an electric field was being applied to the liquid crystal cell 5, under the conditions that (i) MLC-6262 (product name; manufactured by Merck Ltd.; Δε=18.5, Δn=0.1450) was used as the p-type liquid crystal material, (ii) the liquid crystal cell 5 had an electrode width L of 4 µm, an electrode spacing S of 4 µm, an electrode thickness of 100 nm, and a cell gap d of 4 µm, and (iii) a measuring temperature was room temperature (25°C). Fig. 9 illustrates how a light transmittance and a phase difference distribute in a liquid crystal cell 5. The distributions were measured under conditions identical to those of Fig. 8 except that the electrode spacing S was 12 µm.

In the measurements, light having a wavelength of 550 nm was used, and a voltage of 12 V was applied between the pixel electrode 13 and the common electrode 14. Both Figs. 8 and 9 show, by a chain double-dashed line, a relative relation between a measuring location and a location of each of the pixel electrode 13 and the common electrode 14.

As illustrated in Figs. 8 and 9, the phase difference (Δnd) increases in response to a voltage application, and the light transmittance also increases in response to the voltage application accordingly. However, when the phase difference exceeds λ/2 (275 nm in the measurements), the light transmittance decreases.

Results of the measurements first demonstrate that, in order to increase the light transmittance, it is necessary to increase the phase difference as much as possible by means of a voltage application.

According to the present mode, however, the liquid crystal molecules do not rotate uniformly over a display surface, unlike the IPS mode. According to the present mode, unlike the OCB mode, rotations of the liquid crystal molecules are controlled by numerous dark lines, formed in a display region, each of which functions as a kind of wall. As such, in the present mode, a sufficient phase difference is not achieved with use of a normal driving voltage.

Even though it is possible to obtain a sufficient phase difference by increasing a driving voltage, the phase difference will exceed λ/2 in a case where it is increased more than necessary. This causes, as is clear from Figs. 8 and 9, the light transmittance to be adversely decreased. It follows that it is impossible to obtain an excellent display characteristic simply by increasing the driving voltage.

The phase difference occurs by causing the liquid crystal molecules to rotate in response to a voltage application. However, the existence of an optimum range of the phase difference implies an existence of an optimum range of each of physical properties of the liquid crystal (specifically, Δε and Δn).

It is clear from a comparison between Figs. 8 and 9 that the light transmittance is improved by increasing the electrode spacing S, but then a response characteristic is decreased due to a decrease in electric field strength. Note that the present mode is a high-speed display mode. Thus, it is practical to select an electrode width L and an electrode spacing S by taking into consideration a balance between the response characteristic and the light transmittance.

Under the circumstances, the inventors of the present invention have found that it is possible to (i) control a degree of a bend orientation unconstrainedly by changing a panel configuration and physical properties of a liquid crystal material to be used and (ii) obtain a practical light transmittance by thus controlling the degree of the bend orientation.

In view of the fact, especially, that it is not possible for a sufficient phase difference to occur in a case where a normal driving voltage is applied, the inventors of the present invention successfully achieved a practical light transmittance by taking measures to improve driving system. Specifically, the inventors specified liquid crystal physical properties suitable for a case in which a high-voltage driving was carried out by increasing a voltage, which is applied between the electrodes which causes a lateral electric field to be applied to the liquid crystal layer 30, so that the voltage is larger than a voltage (Vop = 6 to 7 V) by which a normal liquid crystal display device is driven.

According to study conducted by the inventors of the present invention, the degree of a bend orientation depends on the physical properties of a liquid crystal material (i.e., a product of a dielectric anisotropy Δε and a refractive index anisotropy Δn). The study also shows that the degree of the bend orientation also varies according to an electrode width L and an electrode spacing S of each comb electrode. It follows that the degree of the bend orientation can be controlled unconstrainedly in accordance with a distribution of the electric field strength in the liquid crystal cell 5.

The liquid crystal panel of the present invention includes: a liquid crystal material sandwiched between a pair of substrates; and a plurality of electrodes which include comb electrodes and which cause an electric field parallel to substrate surfaces to be applied to the liquid crystal material, the liquid crystal material including a p-type liquid crystal material, the p-type liquid crystal material being oriented in a direction perpendicular to the substrate surfaces while no electric field is applied, the comb electrodes each having an electrode width of not more than 5 µm and an electrode spacing of not more than 15 µm, while the liquid crystal panel is being driven, voltages applied to the plurality of electrodes, which cause the electric field parallel to the substrate surfaces to be applied to the liquid crystal material, being different from each other by not less than 7 V between the plurality of electrodes, and the p-type liquid crystal material having a dielectric anisotropy Δε and a refractive index anisotropy Δn whose product (Δε·Δn) falls in a range from 0.9 to 2.5. As such, it is possible to achieve a practical light transmittance of more than 60%.

Note that the expression "degree of a bend orientation" stands for a degree (hereinafter referred to as "curvature") of bend of the p-type liquid crystal molecules 31 in the bend orientation illustrated in (b) of Fig. 6.

A high-voltage driving can be carried out in the present embodiment by, for example, (i) a method using a driver having a high withstand voltage or (ii) a method in which a voltage, which is twice as high as an effective signal voltage, is applied between a pixel electrode and a common electrode by applying to the pixel electrode and the common electrode voltages which have respective opposite phases.

According to the present mode, it is thus possible to increase the degree of a bend orientation and thus to achieve a high light transmittance, by changing the panel configuration and the physical properties of a liquid crystal material to be used. In addition, according to the present invention, since it is possible to unconstrainedly control the degree of a bend orientation as described above, it is possible to achieve a high-speed response through use of a flow effect as in the OCB mode.

When a lateral electric field is applied to the liquid crystal material via the pixel electrode 13 and the common electrode 14, liquid crystal molecules are subjected to rotations and bend orientations. This causes flows of the liquid crystal molecules in the liquid crystal layer 30 (see Fig. 7). There occurs reverse rotations symmetrically with respect to a disclination line, and a torque in an identical direction acts in the vicinity of the disclination line.

In other words, in the liquid crystal panel 2, the flows in the liquid crystal layer 30 do not inhibit each other, unlike in a TN mode and the MVA mode. Instead, when the liquid crystal molecules are to be moved, the flows of liquid crystal molecules act in such a direction as to assist such a movement as in the OCB mode (see Fig. 7). As such, it is possible to achieve a high-speed response.

In the OCB mode, there occurs a transition from a splay orientation to a bend orientation in response to an applied voltage of slightly higher than a critical driving voltage. The bend orientation, at this time, shows a maximum curvature. Therefore, in the OCB mode, a gray scale display is carried out between (i) the bend orientation showing the maximum curvature and (ii) a bend orientation showing a gentle bend in response to a high voltage application.

In contrast, according to the present mode, a gray scale display is carried out between (i) a bend orientation showing a large curvature in response to a high voltage application and (ii) a vertical orientation obtained while no voltage is applied. The maximum curvature depends on an applied voltage. Hence, as an electric field strength becomes larger, the maximum curvature becomes larger. Since a high-voltage driving is thus carried out, in the present mode, while a higher voltage is being applied, it is possible to achieve (i) a maximum curvature which is equal to or larger than that in the OCB mode and (ii) a response whose speed is equal to or faster than that in the OCB mode. Further, since a high-voltage driving is thus carried out while a higher voltage is being applied, it is possible to lower a value of (Δε·Δn). As a result, it is possible to use a liquid crystal material having a low viscosity. This demonstrates that a high-voltage driving, which is carried out while a higher voltage is being applied, is suited to the high-speed response.

The following description deals in more detail with liquid crystal physical properties and a panel configuration suitable for the above high-voltage driving, together with various embodiments of the present invention.

Note that the description below deals with (i) the embodiments of the present invention on the basis of modifications of the liquid crystal panel 2 having a basic configuration illustrated in Figs. 3 and 4 and (ii) results of verifying the modifications. Note, however, that the present invention is not limited to the modifications. It is needless to say that it is also possible to carry out a high-voltage driving by providing a high withstand voltage driver to a liquid crystal panel having the basic configuration illustrated in Figs. 3 and 4.

In the verifications below, it is assumed that the "light transmittance" is defined as 100(%), while no voltage is applied to a device which is prepared by combining two polarizing plates so that transmission axes of the respective two polarizing plates are parallel to each other.

### [Embodiment 1]

An embodiment of the present invention is described below with reference to Fig. 1.

Note that the description below mainly deals with how the present embodiment differs from the liquid crystal panel 2, illustrated in Figs. 3 and 4, which has a basic configuration. Each constituent whose function is identical to that of a corresponding constituent of the liquid crystal panel 2 illustrated in Figs. 3 and 4 is assigned the same reference numeral, and its description is omitted here.

Fig. 1 is a cross-sectional view schematically illustrating an arrangement of a substantial part of a liquid crystal panel 2 of the present embodiment.

The liquid crystal panel 2 of the present embodiment has an arrangement identical to that of the liquid crystal panel 2 illustrated in Figs. 3 and 4, except that the substrate 10 illustrated in Figs. 3 and 4 is replaced with a substrate 40 illustrated in Fig. 1.

According to the substrate 40, there are provided on a glass substrate 11: a common electrode 14; a dielectric layer 41; pixel electrodes 13; and an alignment film 12, in this order. Note that each of the constituents can be made of a material which is similar to a material of which a corresponding constituent of the liquid crystal panel 2 illustrated in Figs. 3 and 4 is made.

The common electrode 14 is an allover electrode provided on the glass substrate 11. The common electrode 14 is provided substantially entirely over a surface of the glass substrate 11, which surface faces the substrate 20, so as to cover a display region (i.e., a region surrounded by the sealing agent 34) of the substrate 40.

The dielectric layer 41 is provided on the common electrode 14 so as to cover the common electrode 14. The dielectric layer 41 preferably has a thickness which falls within a range from about 1 µm to 3 µm in view of processability. A dielectric constant ε which falls within a range from 3 to 7 is suited for the dielectric layer 41 from the perspective that liquid crystal molecules are efficiently rotated in a vicinity of a substrate interface by means of an electric field control. (i) An organic dielectric layer made of a material such as acrylic resin or (ii) an inorganic dielectric layer made of a material such as silicon nitride (SiNx) can be used as the dielectric layer 41.

The pixel electrodes 13 are each a comb electrode. The pixel electrodes 13 and the common electrode 14 are used as electric field application means for applying a lateral electric field to the liquid crystal layer 30.

The alignment film 12 is provided on the dielectric layer 41 so as to cover the pixel electrodes 13.

The following description deals with (i) a result of verifying liquid crystal physical properties suitable for obtaining a practical light transmittance in the present mode and (ii) a method for producing the liquid crystal panel 2 illustrated in Fig. 1.

The description first verifies the liquid crystal physical properties suitable for carrying out a high-voltage driving as described above.

### [Example 1]

First, allover electrodes made of ITO were deposited, each as a common electrode 14, on respective glass substrates 11 by sputtering method so as to entirely cover top surfaces of the respective glass substrates 11.

Next, silicon nitride (SiNx) films, each having a relative dielectric constant ε of 6.9, were deposited, each as a dielectric layer 41, on the respective common electrodes 14 by sputtering method so as to each have a thickness of 0.1 µm.

Then, comb electrodes each having an electrode width L of 2.5 µm and an electrode spacing S of 8.0 µm were formed, as pixel electrodes 13, on each of the dielectric layers 41. The pixel electrodes 13 and the common electrodes 14 were each deposited so as to have a thickness of 100 nm.

Next, alignment film materials JALS-204 (product name; manufactured by JSR Corporation; solid content of 5 weight%; γ-butyrolactone solution) were applied by spin coating method onto the respective dielectric layers 41 so as to cover the pixel electrodes 13. Then, the baking process is carried out for 2 hours at 200°C. This caused substrates 40 each including an alignment film 12 serving as a vertical alignment film to be formed on the respective dielectric layers 41. The alignment films 12 thus obtained each had a dried thickness of 60 nm.

Further, only alignment films 22 was formed on respective glass substrates 21 by a process similar to the process which was employed in the forming of the alignment films 12. Substrates 20 were thus prepared.

Next, resin beads "Micropearl SP2035" (product name; manufactured by Sekisui Chemical Co. Ltd.) each having a diameter of 3.5 µm were dispersed, as spacers 33, on each of the substrates 40. Further, a sealing resin "Struct Bond XN-21S" (product name; manufactured by Mitsui Toatsu Chemicals, Inc.) was, as a sealing agent 34, printed on each of the substrates 20.

Then, the substrates 40 and 20 were combined to each other respectively, and baked for 1 hour at 135°C, so that liquid crystal cells 5 were prepared.

Next, p-type liquid crystal materials which are different from one another in dielectric anisotropy Δε and in refractive index anisotropy Δn were sealed, each as a liquid crystal material, into the respective liquid crystal cells 5 by a vacuum injection method. Liquid crystal layers 30 were thus prepared. After that, polarizing plates 35 and 36 were combined to back and front surfaces of each of the liquid crystal cells 5, respectively, so that (i) transmission axes of the respective polarizing plates 35 and 36 were orthogonal to each other and (ii) each of the transmission axes of the respective polarizing plates 35 and 36 were at an angle of 45 degrees with a direction in which the pixel electrodes 13 extended. Thus, 98 liquid crystal panels 2 (liquid crystal display elements) each having the arrangement illustrated in Fig. 1 were prepared.

Tables 1 and 2 show a maximum light transmittance of each of the 98 liquid crystal panels 2 thus prepared which maximum light transmittance was observed when a voltage (rectangular wave) ranging from 0 V to 20 V was applied between the common electrode 14 and each pixel electrode 13 at room temperature (25°C).

**Table 1**

| Δε | Δn | Δε·Δn | Light transmittance (%) | Δε | Δn | Δε-Δn | Light transmittance (%) | Δε- | Δn | Δε-Δn | Light transmittance (%) | Δε | Δn | Δε·Δn | Light transmittance (%) |
|---|---|---|---|---|---|---|---|---|---|---|---|---|---|---|---|
| 7 | 0.09 | 0.63 | 39 | 7 | 0.1 | 0.7 | 57 | 7 | 0.11 | 0.77 | 57 | 7 | 0.12 | 0.84 | 57 |
| 8 | 0.09 | 0.72 | 44 | 8 | 0.1 | 0.8 | 53 | 8 | 0.11 | 0.88 | 58 | 8 | 0.12 | 0.96 | 63 |
| 9 | 0.09 | 0.81 | 53 | 9 | 0.1 | 0.9 | 63 | 9 | 0.11 | 0.99 | 66 | 9 | 0.12 | 1.08 | 67 |
| 10 | 0.09 | 0.9 | 60 | 10 | 0.1 | 1 | 65 | 10 | 0.11 | 1.1 | 67 | 10 | 0.12 | 1.2 | 70 |
| 11 | 0.09 | 0.99 | 62 | 11 | 0.1 | 1.1 | 65 | 11 | 0.11 | 1.21 | 66 | 11 | 0.12 | 1.32 | 73 |
| 12 | 0.09 | 1.08 | 62 | 12 | 0.1 | 1.2 | 68 | 12 | 0.11 | 1.32 | 68 | 12 | 0.12 | 1.44 | 73 |
| 13 | 0.09 | 1.17 | 63 | 13 | 0.1 | 1.3 | 68 | 13 | 0.11 | 1.43 | 70 | 13 | 0.12 | 1.56 | 72 |
| 14 | 0.09 | 1.26 | 63 | 14 | 0.1 | 1.4 | 64 | 14 | 0.11 | 1.54 | 70 | 14 | 0.12 | 1.68 | 72 |
| 15 | 0.09 | 1.35 | 65 | 15 | 0.1 | 1.5 | 65 | 15 | 0.11 | 1.65 | 69 | 15 | 0.12 | 1.8 | 71 |
| 16 | 0.09 | 1.44 | 66 | 16 | 0.1 | 1.6 | 64 | 16 | 0.11 | 1.76 | 69 | 16 | 0.12 | 1.92 | 72 |
| 17 | 0.09 | 1.53 | 65 | 17 | 0.1 | 1.7 | 66 | 17 | 0.11 | 1.87 | 68 | 17 | 0.12 | 2.04 | 70 |
| 18 | 0.09 | 1.62 | 64 | 18 | 0.1 | 1.8 | 62 | 18 | 0.11 | 1.98 | 66 | 18 | 0.12 | 2.16 | 68 |
| 19 | 0.09 | 1.71 | 63 | 19 | 0.1 | 1.9 | 62 | 19 | 0.11 | 2.09 | 67 | 19 | 0.12 | 2.28 | 66 |
| 20 | 0.09 | 1.8 | 61 | 20 | 0.1 | 2 | 62 | 20 | 0.11 | 2.2 | 63 | 20 | 0.12 | 2.4 | 63 |

**Table 2**

| Δε | Δn | Δε·Δn | Light transmittance (%) | Δε | Δn | Δε·Δn | Light transmittance (%) | Δε | Δn | Δε·Δn | Light transmitttance (%) |
|---|---|---|---|---|---|---|---|---|---|---|---|
| 7 | 0.13 | 0.91 | 65 | 7 | 0.14 | 0.98 | 64 | 7 | 0.15 | 1.05 | 62 |
| 8 | 0.13 | 1.04 | 64 | 8 | 0.14 | 1.12 | 66 | 8 | 0.15 | 1.2 | 63 |
| 9 | 0.13 | 1.17 | 68 | 9 | 0.14 | 1.26 | 65 | 9 | 0.15 | 1.35 | 62 |
| 10 | 0.13 | 1.3 | 69 | 10 | 0.14 | 1.4 | 66 | 10 | 0.15 | 1.5 | 62 |
| 11 | 0.13 | 1.43 | 70 | 11 | 0.14 | 1.54 | 67 | 11 | 0.15 | 1.65 | 63 |
| 12 | 0.13 | 1.56 | 70 | 12 | 0.14 | 1.68 | 64 | 12 | 0.15 | 1.8 | 61 |
| 13 | 0.13 | 1.69 | 73 | 13 | 0.14 | 1.82 | 66 | 13 | 0.15 | 1.95 | 60 |
| 14 | 0.13 | 1.82 | 71 | 14 | 0.14 | 1.96 | 67 | 14 | 0.15 | 2.1 | 62 |
| 15 | 0.13 | 1.95 | 73 | 15 | 0.14 | 2.1 | 62 | 15 | 0.15 | 2.25 | 62 |
| 16 | 0.13 | 2.08 | 70 | 16 | 0.14 | 2.24 | 62 | 16 | 0.15 | 2.4 | 60 |
| 17 | 0.13 | 2.21 | 69 | 17 | 0.14 | 2.38 | 60 | 17 | 0.15 | 2.55 | 55 |
| 18 | 0.13 | 2.34 | 65 | 18 | 0.14 | 2.52 | 51 | 18 | 0.15 | 2.7 | 53 |
| 19 | 0.13 | 2.47 | 61 | 19 | 0.14 | 2.66 | 47 | 19 | 0.15 | 2.85 | 50 |
| 20 | 0.13 | 2.6 | 59 | 20 | 0.14 | 2.8 | 43 | 20 | 0.15 | 3 | 47 |

As described earlier, although the present mode achieves a high speed, a wide viewing angle, and a high contrast, it has conventionally had a problem of a low light transmittance.

The liquid crystal panel 2 of the present invention, however, achieves a light transmittance of more than 60% in a case where (Δε·Δn) falls within a range from 0.9 to 2.5 (see Table 1). As is clear from the results, the inventors have successfully achieved a practical light transmittance (60%) by optimizing the product of Δε and Δn.

In the case where the light transmittance is not less than 60% as described above, it is unnecessary to separately provide a film for luminance improvement. It is thus possible to inexpensively produce the liquid crystal panel 2 of the present mode. Furthermore, in a case where the light transmittance exceeds 70%, it is possible to reduce power consumption of a backlight as compared to existing liquid crystal panels. This advantage provides a significantly high practical value.

### [Example 2]

As described earlier, the degree of a bend orientation not only depends on the physical properties of the liquid crystal material (i.e., a product of the dielectric anisotropy Δε and the refractive index anisotropy Δn), but also varies according to the electrode width L and the electrode spacing S of the comb electrodes. The following description thus verifies an electrode width L and an electrode spacing S, suitable for the present mode, of the comb electrodes.

In the present Example, 17 liquid crystal panels 2 each having the arrangement illustrated in Fig. 1 were prepared by a process similar to the process of the Example 1, except that (i) a p-type liquid crystal material (manufactured by Merck Ltd.) having εΔ of 15.2 and Δn of 0.12 was used as a liquid crystal material and (ii) the electrode width L and the electrode spacing S of pixel electrodes 13 each serving as the comb electrode were altered variously.

Table 3 shows a maximum light transmittance of each of the liquid crystal panels 2 thus prepared which maximum light transmittance was observed when a voltage (rectangular wave) ranging from 0 V to 20 V was applied between the common electrode 14 and each pixel electrode 13 at room temperature (25°C).

**Table 3**

| Electrode width (µm) | Electrode spacing (µm) | Light transmittance (%) |
|---|---|---|
| 3 | 3 | 61 |
| 3 | 6 | 66 |
| 3 | 9 | 70 |
| 3 | 12 | 73 |
| 3 | 15 | 62 |
| 3 | 18 | 48 |
| 4 | 4 | 62 |
| 4 | 8 | 65 |
| 4 | 12 | 74 |
| 4 | 16 | 45 |
| 5 | 5 | 60 |
| 5 | 10 | 68 |
| 5 | 15 | 73 |
| 5 | 20 | 39 |
| 6 | 6 | 50 |
| 6 | 12 | 43 |
| 6 | 18 | 38 |

As described earlier, in the present mode, transmitted light is modulated more between the comb electrodes than above the comb electrodes. As such, the electrode spacing S is preferably greater than the electrode width L in principle.

A result shown in Table 3 demonstrates that (i) the light transmittance is gradually increased by widening the electrode spacing S of the pixel electrodes 13 each serving as the comb electrodes and (ii) the light transmittance is rapidly decreased when the electrode spacing S exceeds 15 µm. This is because the electric field strength becomes weaker as the electrode spacing S increases and therefore the driving voltage substantially becomes higher.

According to the present Example, the result of Table 2 shows that (i) the electrode width L of the comb electrodes is preferably not larger than 5 µm and (ii) the electrode spacing S of the comb electrodes is preferably not larger than 15 µm.

The inventors of the present invention have diligently considered and consequently found that the above tendency is not limited to the liquid crystal panel 2 and is also true of any liquid crystal panel 2 of the present mode, such as the liquid crystal panel 2 having the basic configuration illustrated in Figs. 3 and 4.

The liquid crystal panel 2 of the present embodiment has an extremely simple arrangement and can thus be produced without any significant design variation. As such, it is possible to inexpensively produce the liquid crystal panel 2.

### [Embodiment 2]

Another embodiment of the present invention is described below with reference to (a) and (b) of Fig. 10 and Fig. 11.

Note that the description below mainly deals with how the present embodiment differs from the liquid crystal panel 2, illustrated in Figs. 3 and 4, which has a basic configuration. Any constituent which is identical in function to a corresponding constituent of the liquid crystal panel 2 illustrated in Figs. 3 and 4 is assigned the same reference numeral, and a description of such a member is omitted here.

(a) of Fig. 10 is a cross-sectional view schematically illustrating an arrangement of a substantial part of a liquid crystal panel 2 of the present embodiment. (b) of Fig. 10 is a timing chart illustrating how a voltage is applied to each electrode illustrated in (a) of Fig. 10.

As illustrated in (a) of Fig. 10, the liquid crystal panel 2 of the present embodiment has an arrangement similar to the arrangement of the liquid crystal panel 2 illustrated in Figs. 3 and 4, except that (i) the substrate 10 illustrated in Figs. 3 and 4 is replaced with a substrate 50 and (ii) the substrate 20 illustrated in Figs. 3 and 4 is replaced with a substrate 60.

In other words, according to the liquid crystal cell 5 in the liquid crystal panel 2 of the present embodiment, the liquid crystal layer 30, including a p-type liquid crystal material, is sandwiched between the substrates 50 and 60 which face each other.

The substrate 50 is arranged so that pixel electrodes 13 and an alignment film 12 are provided, in this order, on a glass substrate 11. The substrate 60 is arranged so that a common electrode 14 and an alignment film 22 are provided, in this order, on a glass substrate 21.

As illustrated in (a) of Fig. 10, according to the above liquid crystal panel 2, the pixel electrodes 13 are each a comb electrode, and the common electrode 14 is an allover electrode, as in the liquid crystal panel 2 illustrated in Fig. 1. The common electrode 14 is provided on the glass substrate 21 substantially entirely over a surface of the glass substrate 21 so as to cover a display region (i.e., a region surrounded by a sealing agent 34) of the substrate 60. The alignment films 12 and 22 are provided so as to cover the pixel electrodes 13 and the common electrode 14, respectively.

As in the Embodiment 1, the pixel electrodes 13 and the common electrode 14 of the Embodiment 2 are not limited to respective particular materials. Any electrode material similar to that described as an example in the Embodiment 1 can be used. Note that, in a case where the substrate 60 is used as an upper substrate as illustrated in (a) of Fig. 10, a film made of a transparent electrode material such as ITO is used as the common electrode 14.

As described above, the liquid crystal panel 2 illustrated in (a) of Fig. 10 is arranged such that the common electrode 14 is provided on the substrate 60 that faces the substrate 50 on which the pixel electrodes 13 each being a comb electrode are provided.

In the liquid crystal panel 2 illustrated in (a) of Fig. 10, the pixel electrodes 13 each being a comb electrode function as electric field application means for applying a lateral electric field to the liquid crystal layer 30.

To this end, according to the present embodiment, two pixel electrodes 13 are provided so as to (i) be juxtaposed to each other and (ii) be driven independently of each other. (The pixel electrodes 13 thus juxtaposed to each other are hereinafter referred to as "pixel electrodes 13A and 13B.") Specifically, as illustrated in (a) of Fig. 10, the pixel electrodes 13A and 13B of the present embodiment, which are provided so as to be driven independently of each other, are provided so as to face each other in such a manner that branch electrodes (branch lines) extending from a trunk electrode (trunk line) of one of the pixel electrodes 13A and 13B mesh with branch electrodes extending from a trunk electrode of the other of the pixel electrodes 13A and 13B.

As illustrated in (b) of Fig. 10, according to the present embodiment, voltages are applied between the common electrode 14 and the respective pixel electrodes 13A and 13B so that a voltage applied to the pixel electrode 13A (first pixel electrode) constantly has a phase opposite to that of the pixel electrode 13B (second pixel electrode). As a result, it is possible to apply a lateral electric field to the liquid crystal layer 30.

Fig. 11 shows a director distribution of p-type liquid crystal molecules 31 and equipotential curves in the liquid crystal cell 5. The director distribution and the equipotential curves are observed when voltages (rectangular waves) of +6V and -6V are respectively applied to the pixel electrodes 13A and 13B illustrated in (a) and (b) of Fig. 10. The equipotential curves are shown at intervals of 0.5 V.

Lines of electric force each extend in a direction perpendicular to the equipotential curves. Fig. 11 further shows, by a double-headed arrow with a dotted line, each of the lines of electric force observed when the voltages of +6V and -6V are applied to the pixel electrodes 13A and 13B, respectively. As is clear from Fig. 11, the present embodiment demonstrates that a lateral electric field is applied to the liquid crystal layer 30, and the lines of electric force are thus bent in a semicircle between the individual pixel electrodes 13 and the common electrode 14 due to the electric field application, so that the liquid crystal molecules are oriented in an arc in a bend orientation in a substrate thickness direction.

Further, according to the present embodiment, it is possible to apply a voltage, which is effectively twice as high as a signal voltage, between the pixel electrodes 13A and 13B, by applying to the pixel electrode 13A and 13B voltages whose phases are opposite to each other, as described above.

The following description further verifies optimum liquid crystal physical properties with the use of the liquid crystal panel 2.

### [Example 3]

First, there were provided, on each of respective glass substrates 11, comb electrodes, serving as pixel electrodes 13, each of which was made of ITO and had an electrode width L of 3.0 µm, an electrode spacing S of 8.0 µm, and a thickness of 100 nm. (The pixel electrodes 13 juxtaposed to each other are hereinafter referred to as "pixel electrodes 13A and 13B.") An alignment film material JALS-204 (product name; manufactured by JSR Corporation; solid content: 5 weight%; γ-butyrolactone solution) was applied onto each of the glass substrates 11 by spin coating method, and was then baked for 2 hours at 200°C. This formed substrates 50 in which alignment films 12, each serving as a vertical alignment film, were provided on the respective glass substrates 11 so as to cover the pixel electrodes 13A and 13B. The alignment films 12 thus formed each had a dried thickness of 60 nm.

Further, there were provided, entirely on main surfaces of respective glass substrates 21, transparent electrodes, each serving as a common electrode 14, each of which was made of ITO and had a thickness of 100 nm. Alignment films 22 each having a dried thickness of 60 nm were then formed on the respective glass substrates 21 by a process similar to a process for the alignment films 12. Substrates 60 were thus formed.

Next, resin beads Micropearl SP2035 (product name; manufactured by Sekisui Chemical Co. Ltd.) each having a diameter of 3.5 µm were dispersed, as spacers 33, on each of the substrates 50. Further, a sealing resin Struct Bond XN-21S (product name; manufactured by Mitsui Toatsu Chemicals, Inc.) was, as a sealing agent 34, printed on each of the substrates 60.

Then, the substrates 50 and 60 were combined to each other respectively, and baked for 1 hour at 135°C, so that liquid crystal cells 5 were prepared.

Next, p-type liquid crystal materials which were different from one another in dielectric anisotropy Δε and in refractive index anisotropy Δn were sealed, each as a liquid crystal material, into the respective liquid crystal cells 5 by a vacuum injection method. Liquid crystal layers 30 were thus prepared. After that, polarizing plates 35 and 36 were combined to back and front surfaces of each of the liquid crystal cells 5, respectively, so that (i) transmission axes of the respective polarizing plates 35 and 36 were orthogonal to each other and (ii) each of the transmission axes of the respective polarizing plates 35 and 36 were at an angle of 45 degrees with a direction in which the pixel electrodes 13 extended. Thus, 15 liquid crystal panels 2 (liquid crystal display elements) each having the arrangement illustrated in (a) of Fig. 10 were prepared.

In each of the liquid crystal panels 2 thus prepared, voltages (rectangular waves) ranging from 0 V to 10 V were applied between the common electrode 14 and the respective pixel electrodes 13A and 13B at room temperature (25°C). The voltages were applied to the pixel electrodes 13A and 13B so as to be constantly opposite to each other in phase (see (b) of Fig. 10). Table 4 shows a maximum light transmittance of each of the liquid crystal panels 2 which maximum light transmittance was observed when the voltages were applied to the pixel electrodes 13A and 13B.

**Table 4**

| Δε | Δn | Δε·Δn | Light transmittance (%) |
|---|---|---|---|
| 7 | 0.09 | 0.63 | 32 |
| 8 | 0.09 | 0.72 | 40 |
| 9 | 0.09 | 0.81 | 52 |
| 10 | 0.09 | 0.9 | 61 |
| 10 | 0.1 | 1 | 64 |
| 10 | 0.12 | 1.2 | 70 |
| 12 | 0.12 | 1.44 | 72 |
| 13 | 0.12 | 1.56 | 71 |
| 14 | 0.12 | 1.68 | 72 |
| 15 | 0.13 | 1.95 | 72 |
| 16 | 0.14 | 2.24 | 65 |
| 17 | 0.14 | 2.38 | 63 |
| 18 | 0.14 | 2.52 | 53 |
| 18 | 0.15 | 2.7 | 50 |
| 20 | 0.14 | 2.8 | 39 |

As is clear from a result shown in Table 4, it is possible to achieve an excellent light transmittance characteristic in the present Example as well by using, as a liquid crystal material, a p-type liquid crystal material whose (Δε·Δn) falls within a range from 0.9 to 2.5.

It is true that the liquid crystal panel disclosed in Non Patent Literature 1 described earlier has an arrangement similar to the arrangement of the liquid crystal panel 2 of the present embodiment.

Non Patent Literature 1, however, does not intend to improve a light transmittance, unlike the present invention. Further, Non Patent Literature 1 pays no attention to the product of a dielectric anisotropy Δε and a refractive index anisotropy Δn. In the liquid crystal material used in Non Patent Literature 1, Δε is 7.4, Δn is 0.088, (Δn·d) is 0.528 µm, and (Δε·Δn) is therefore 0.65. This value is smaller than that of the present embodiment, and a light transmittance of the liquid crystal panel is also smaller than a light transmittance in an existing MVA mode.

### [Embodiment 3]

Fig. 12 is a cross-sectional view schematically illustrating an arrangement of a substantial part of a liquid crystal panel 2 of the present embodiment.

As illustrated in Fig. 12, the liquid crystal panel 2 of the present embodiment has an arrangement similar to the arrangement of the liquid crystal panel 2 illustrated in Figs. 3 and 4, except that the substrate 20 illustrated in Figs. 3 and 4 is replaced with a substrate 70. According to the liquid crystal panel 2 illustrated in Fig. 12, a common electrode is provided in each of a pair of the substrates 10 and 70 which faces each other.

According to the substrate 10, there are provided, on a glass substrate 11, a pair of comb electrodes, namely a pixel electrode 13 and a common electrode 14 (first common electrode), and an alignment film 12 which is provided so as to cover the pixel electrode 13 and the common electrode 14 (see Fig. 12). The pixel electrode 13 and the common electrode 14 function as electric field application means for applying a lateral electric field to the liquid crystal layer 30.

The substrate 70 is arranged so that there are provided, on a glass substrate 21, a common electrode 71 (second common electrode), a dielectric layer 72, and an alignment film 22 in this order.

The common electrode 71 is an allover electrode provided on the glass substrate 21. The common electrode 71 is provided substantially entirely over a surface of the glass substrate 21 so as to cover a display region (i.e., a region surrounded by the sealing agent 34) of the substrate 70. The dielectric layer 72 is provided so as to cover the common electrode 71. The alignment film 22 is provided so as to cover the dielectric layer 72.

As in the above embodiment, the dielectric layer 72 preferably has a thickness which falls within a range from about 1 µm to 3 µm in view of processability. A dielectric constant ε which falls within a range from 3 to 7 is suited for the dielectric layer 72 from the perspective that liquid crystal molecules are efficiently rotated in a vicinity of a substrate interface by means of an electric field control. (i) an organic dielectric layer made of a material such as acrylic resin or (ii) an inorganic dielectric layer made of a material such as silicon nitride (SiNx) can be used as the dielectric layer 41.

The pixel electrodes 13 and the common electrodes 14 and 71 are not limited to respective particular materials. Any electrode material similar to that described as an example in the Embodiment 1 can be used. Note that, in a case where the substrate 70 is used as an upper substrate as illustrated in Fig. 12, a film made of a transparent electrode material such as ITO is used as the common electrode 71.

The following description verifies a relation between (i) an applied voltage and (ii) a light transmittance and a response time with the use of the liquid crystal panel 2.

### [Example 4]

First, there are provided, entirely on a main surface of a glass substrate 21, a transparent electrode, serving as a common electrode 71, which was made of ITO. An acryl resist film having a dielectric constant ε of 3.7 and a thickness of 3.2 µm was then deposited on the glass substrate 21. A dielectric layer 72, which covers the common electrode 71, was thus formed.

Next, an alignment film material JALS-204 (product name; manufactured by JSR Corporation; solid content of 5 weight%; γ-butyrolactone solution) was applied by spin coating onto the dielectric layer 72. Then, the baking process is carried out for 2 hours at 180°C so as to be dried. This caused a substrate 40 including an alignment film 22 to be formed on the dielectric layer 41. The alignment film 22 thus obtained had a dried thickness of 60 nm.

Further, there were provided, on a glass substrate 11, comb electrodes, serving as a pixel electrode 13 and a common electrode 14, each of which had an electrode width L of 3 µm and an electrode spacing S of 5 µm and was made of ITO. An alignment film 12 identical to the alignment film 22 was then formed on the glass substrate 11, by a process similar to a process for the alignment film 22, so as to cover the pixel electrode 13 and the common electrode 14. A substrate 10 was thus formed. Note that each of the pixel electrode 13 and the common electrodes 14 and 71 had a thickness of 100 nm.

Then, the substrates 10 and 70 were combined to each other via bead spacers, serving as spacers 33, as in the Example 1. A liquid crystal cell 5 having a cell gap d of 3.4 µm was thus prepared.

Next, a p-type liquid crystal material in which Δε = 23.2 and Δn = 0.10 was sealed as a liquid crystal material into the liquid crystal cell 5. As a result, a liquid crystal layer 30 was thus prepared. After that, polarizing plates 35 and 36 were combined to back and front surfaces of the liquid crystal cell 5, respectively, so that transmission axes of the respective polarizing plates 35 and 36 were orthogonal to each other. As a result, a liquid crystal panel 2 having the arrangement illustrated in Fig. 12 was produced.

An electro-optic characteristic of the thus produced liquid crystal panel 2 was measured at room temperature (25°C) by setting to 0 V an electric potential of each of the common electrodes 14 and 71 in the liquid crystal panel 2 and by changing, within a range from 0 to 8 V, an electric potential of the pixel electrode 13 in the liquid crystal panel 2. Table 5 shows a result of the measurement.

**Table 5**

| Applied voltage (V) | Light transmittance (%) | Response time (ms) |
|---|---|---|
| 5 | 44.8 | 37.3 |
| 6 | 55.1 | 24.6 |
| 7 | 60.4 | 16 |
| 8 | 65.5 | 14.8 |
| 9 | 70.2 | 11.9 |
| 10 | 72.2 | 10.2 |

As shown in Table 5, a practical light transmittance can be achieved in a case where a voltage applied between the electrodes for applying a lateral electric field to the liquid crystal layer 30 is not less than 7 V (preferably an effective voltage applied to the liquid crystal layer 30 is not less than 7 V). The response time is defined as a period of time required, after a predetermined voltage is applied in a state where no voltage is being applied, for the liquid crystal layer 30 to have a 90% change in light transmittance. Note that the "RESPONSE TIME" in Table 5 indicates a sum of a rising response time and a falling response time. The response time of 16 ms indicates that a sufficient liquid crystal response can be achieved within one (1) frame, and therefore has a high practical value.

The present embodiment describes an example case in which the common electrode 71, the dielectric layer 72, and the alignment film 22 are provided on the glass substrate 21 in this order (see Fig. 12). The present embodiment is, however, not limited to this.

Fig. 13 shows a result of finding, on the basis of the physical properties of the materials and the cell configuration used in Example 4, an electric field distribution and a liquid crystal director distribution in the liquid crystal cell 5. The distributions were observed when a voltage of 8 V was applied to the liquid crystal panel 2 produced in Example 4. Note that Fig. 13 omits the pixel electrode 13, the common electrodes 14 and 71, and the alignment films 12 and 22.

According to the liquid crystal panel 2 produced in Example 4, it is clear from the result shown in Fig. 13 that even p-type liquid crystal molecules 31, present in the vicinity of the surface of the substrate 70 serving as a counter substrate, were rotated.

In the case where the common electrode 71 (V=0) and the dielectric layer 72 are provided on the side of the substrate 70 serving as a counter substrate as illustrated in Fig. 12, they affect and deform lines of electric force. This causes a greater horizontal inclination of the p-type liquid crystal molecules 31 present in the vicinity of the substrate 70 (i.e., an upper substrate) (see Fig. 13). As a result, it is possible, in such a liquid crystal panel 2, to rotate the p-type liquid crystal molecules 31 present even in the vicinity of the surface of the substrate 70 serving as the counter substrate.

The common electrode 71 is therefore simply required to be included in the substrate 70, which is located opposite to the substrate 10 which includes the comb electrodes, so as to cause lines of electric force to be deformed in the vicinity of the surface of the substrate 70 as described above. Specifically, the common electrode 71 is simply required to be provided on at least one of surfaces of the glass substrate 21 in the substrate 70.

The substrate 70 can, for example, be arranged such that (i) the dielectric layer 41 and the alignment film 22 are provided, in this order, on a surface of the glass substrate 21 which surface faces the liquid crystal layer 30 and (ii) the common electrode 71 is provided on a surface of the glass substrate 21 which surface is opposite to the surface that faces the liquid crystal layer 30.

The present embodiment describes an example case in which the comb electrodes (i.e., the pixel electrode 13 and the common electrode 14) are provided in a single layer on the glass substrate 11 of the substrate 10. The present embodiment is, however, not limited to this.

Specifically, the pixel electrode 13 and the common electrode 14 can be provided, for example, in respective different layers between which a dielectric layer is provided, as in the liquid crystal panel 2 of Fig. 1. More specifically, the substrate 10 can, for example, be arranged such that (i) a first comb electrode is provided on the glass substrate 11 as a common electrode 14, (ii) a dielectric layer 41 is provided on the glass substrate 11 so as to cover the first comb electrode, (iii) a second comb electrode is provided on the dielectric layer 41 as a pixel electrode 13, and (iv) an alignment film 12 is provided on the dielectric layer 41 so as to cover the second comb electrode.

In this case, the pixel electrode 13 and the common electrode 14 are provided so that (i) the dielectric layer 41 is provided therebetween and (ii) branch electrodes (i.e., comb teeth) of the pixel electrode 13 and those of the common electrode 14 are alternately provided so as to be parallel to each other when they are viewed from above (i.e., when the substrate 10 is viewed in a direction perpendicular to the substrate).

In this case, a fringe electric field is generated between the pixel electrode 13 and the common electrode 14, by setting the electrode spacing S between the pixel electrode 13 and the common electrode 14 so that the electrode spacing S is smaller than a cell gap d.

In the case where the pixel electrode 13 and the common electrode 14 provided in a single substrate are thus located in respective different layers between which a dielectric layer is provided, it is possible to improve yield as compared to the case in which the pixel electrode 13 and the common electrode 14 are provided in a single layer. According to the present embodiment, it is thus possible to stably and inexpensively produce (i) a liquid crystal panel 2 which can simultaneously achieve a high-speed response, a wide viewing angle, and a high contrast and (ii) a liquid crystal display device 1 including the liquid crystal panel 2.

### [Embodiment 5]

The present embodiment describes a liquid crystal panel 2 which is particularly suitable for a case in which a high-voltage driving is carried out as in the present invention.

Fig. 14 is a plan view schematically illustrating an arrangement of a pixel of an electrode substrate for use in the liquid crystal panel 2 of the present embodiment. Fig. 15 is an equivalent circuit diagram of electrodes of the electrode substrate. Pixel electrodes 13 adjacent to each other are referred to as "pixel electrodes 13A and 13B" in the present embodiment as well.

The present embodiment describes an example case in which the pixel electrodes 13 and the common electrode 14 are provided as illustrated in the cross-sectional view of Fig. 1, in a layer direction. The present embodiment thus refers to Fig. 1 when describing its cross-sectional arrangement. The present embodiment is, however, not limited to this, and can alternatively have the arrangement illustrated in Fig. 12.

As illustrated in Fig. 14, the liquid crystal panel 2 of the present embodiment includes: a plurality of gate lines GL (namely, gate lines GL(n), GL(n+1), ..., GL(n+m); m represents an integer of 1 or greater); a plurality of data lines SLA (namely, data lines SLA(n), SLA(n+1), ..., SLA(n+m); m represents an integer of 1 or greater); and a plurality of data lines SLB (namely, data lines SLB(n), SLB(n+1), ..., SLB(n+m); m represents an integer of 1 or greater). The plurality of gate lines GL (orthogonally) cross each of (i) the plurality of data lines SLA and (ii) the plurality of data lines SLB.

The plurality of data lines SLA and the plurality of data lines SLB are alternately provided so as to be adjacent to one another in, for example, a column direction. Note that the column direction is interchangeable with a line direction.

The description below simply uses the term "data lines SL" in cases of collectively referring to the plurality of data lines SLA and the plurality of data lines SLB.

As described above, the liquid crystal panel 2 of the present embodiment (i) has an arrangement identical to the arrangement of the liquid crystal panel 2 illustrated in Fig. 1, (ii) includes the substrate 10 (an electrode substrate) which is an active matrix element substrate, and (iii) includes twice as many data lines SL as gate lines GL, as illustrated in Fig. 14.

In other words, a display section of the liquid crystal panel 2 in accordance with the present embodiment is constituted by unit pixels each including a single gate line GL and two data lines SLA and SLB. The liquid crystal panel 2 is arranged such that (i) signal voltages are applied, via signal electrodes and the respective data lines SLA and SLB, to a pair of comb electrodes, i.e., the respective pixel electrodes 13A and 13B and (ii) the liquid crystal layer 30 is driven by an electric field generated between the common electrode 14 and the respective pixel electrodes 13A and 13B. In the liquid crystal panel 2, an electric potential difference is caused by providing two data lines SL within a single pixel as described above.

The following description deals in detail with the arrangement of the liquid crystal panel 2.

As illustrated in Fig. 14, each pixel in the liquid crystal panel 2 includes: two TFTs 81 and 82; and two pixel electrodes 13A and 13B, serving as pixel electrodes 13, provided so as to be driven independently of each other.

The TFT 81 is provided in a region where the gate line GL(n) intersects with the data line SLA(n), and functions as a switching element for the pixel electrode 13A. The TFT 82 is provided in a region where the gate line GL(n) intersects with the data line SLB(n), and functions as a switching element for the pixel electrode 13B.

The TFT 81 has a drain electrode connected to the pixel electrode 13A, whereas the TFT 82 has a drain electrode connected to the pixel electrode 13B.

Source electrodes of the respective TFTs 81 and 82 are connected to data lines SLA(n) and SLB(n), respectively. Specifically, the source electrode of the TFT 81 is connected to the data line SLA(n), whereas the source electrode of the TFT 82 is connected to the data line SLB(n).

Gate electrodes of the respective TFTs 81 and 82 are both connected to the single gate line GL(n). With the arrangement, the TFTs 81 and 82 can drive the pixel electrodes 13A and 13B at identical timing.

Further, a capacitor line CL is provided between the gate line GL(n) and its adjacent gate line GL(n+1) so as to extend parallel to the gate lines GL(n) and GL(n+1).

The pixel electrodes 13A and 13B each have a comb-shaped configuration, and are provided so as to face each other in such a manner that branch electrodes extending from a trunk electrode of one of the pixel electrodes 13A and 13B mesh with branch electrodes extending from a trunk electrode of the other of the pixel electrodes 13A and 13B.

As illustrated in Fig. 14, one of the branch electrodes of the pixel electrode 13A is shaped so as to have a width which is larger than those of the other branch electrodes so as to shield the data line SLB(n) provided under the pixel electrode 13A.

In the liquid crystal panel 2, liquid crystal capacitors Clc1 and Clc2 and storage capacitors Cst1 and Cst2 are formed between the common electrode 14 (not shown in Fig. 14; see Fig. 1) and each of the pixel electrodes 13A and 13B (see Fig. 15).

As illustrated in Fig. 15, in the liquid crystal panel 2, (i) an electric charge generated by a voltage applied via the data line SLA(n) is stored by the liquid crystal capacitance Clc1 and the storage capacitance Cst1 in response to switching of the TFT 81, and (ii) an electric charge generated by a voltage applied via the data line SLB(n) is stored by the liquid crystal capacitance Clc2 and the storage capacitance Cst1 in response to switching of the TFT 82.

Fig. 16 is a timing chart illustrating how a voltage is applied to each of (i) the pixel electrodes 13A and 13B, (ii) the gate line GL(n) connected to the gate electrodes of the respective TFTs 81 and 82, and (iii) the common electrode 14.

As illustrated in Fig. 16, voltages, whose amplitudes are identical to each other and whose polarities are reverse to each other, are applied to the respective pixel electrodes 13A and 13B at identical timing. This causes a voltage, which is twice as high as each of such voltages, to be applied with respect to each part of the liquid crystal layer 30 which part corresponds to a single pixel.

As such, it is possible to suitably apply the substrate 10 (electrode substrate) having the above arrangement to a liquid crystal panel 2 which requires a high applied voltage.

Since the above arrangement allows a high voltage to be applied to the liquid crystal panel 2 as described above, it is possible to use a liquid crystal material having a relatively low dielectric anisotropy Δε. It follows that it is possible, for example, to (i) use a liquid crystal material having a relatively low viscosity. This allows a reduction in a response time.

Furthermore, a voltage which is twice as high as a signal voltage can be applied with respect to the liquid crystal layer 30, by providing two data lines SL and two TFTs within each pixel as described above. In other words, a voltage, which is twice as high as an applied voltage, can be applied between the pixel electrodes 13A and 13B. This allows a reduction in a driving voltage and therefore eliminates the need to use a driver which has a high withstand voltage. As such, it is possible to inexpensively produce the liquid crystal panel 2.

According to the above arrangement, it is only necessary to actually apply, to each of the pixel electrodes 13A and 13B, a voltage which is half as high as a voltage to be applied with respect to the liquid crystal layer 30. It is also possible to reduce power consumption, accordingly. This will be demonstrated in detail with reference to an Example.

### [Example 5]

In the present Example, an electro-optic characteristic of the liquid crystal panel 2 illustrated in Fig. 14 was measured.

The electrode spacing S of the pixel electrodes 13 (i.e., the electrode spacing between the pixel electrodes 13A and 13B) was 7.5 µm. The electrode width L of the pixel electrodes 13 (i.e., the electrode width of each of the pixel electrodes 13A and 13B) was 2.5 µm. Each of the pixel electrodes 13 and the common electrode 14 was made of ITO, and had a thickness of 100 nm. A color filter substrate including a color filter layer was used as a counter substrate 20.

A p-type liquid crystal material whose Δε and Δn were 18.6 and 0.12, respectively, was used as a liquid crystal material. A cell gap d (i.e., a thickness of the liquid crystal layer) was 3.4 µm.

Polarizing plates 35 and 36 were bonded to back and front surfaces of the liquid crystal cell 5, respectively, so that their respective transmission axes are orthogonal to each other.

Voltages whose amplitudes are identical to each other and whose phases were constantly reverse to each other were applied to the respective pixel electrodes 13A and 13B via their respective TFTs 81 and 82 (see Fig. 16).

When signal voltages of 7 V were applied at room temperature (25°C) to the respective pixel electrodes 13A and 13B, a light transmittance was 5.8%, a rising response time was 3.3 ms, a falling response time was 4.0 ms, and a contrast ratio was 3500:1. If the light transmittance is converted to a mode light transmittance which is comparable to other Examples under the condition that (i) a light transmittance of each of the polarizing plates 35 and 36 was 40%, (ii) a light transmittance of the color filter was 35%, and (iii) a pixel aperture ratio was 55%, then the mode light transmittance thus converted is 75.3(%) (=0.058/0.40/0.35/0.55).

The reason, why such an excellent display characteristic was obtained although the signal voltage was 7 V, is that a voltage of 14 V, which was twice as high as the signal voltage of 7 V, was applied with respect to the liquid crystal layer 30.

The present Example describes an example case in which each pixel included two data lines SL and two TFTs. The present embodiment is, however, not limited to this. It is also possible, for example, to provide three data lines SL and three TFTs in each pixel. By providing a plurality of data lines SL and TFTs (i.e., the number which is equal to an integral multiple of the number of the gate lines GL) in each pixel, it is possible to (i) drive the pixel electrodes 13A and 13B by applying independent signal voltages and therefore (ii) carry out a high-voltage driving without use of a driver which has a high withstand voltage.

As is clear from the result of each the Examples, the product of the dielectric anisotropy Δε and the refractive index anisotropy Δn of the p-type liquid crystal material preferably falls within a range from 0.9 to 2.5 as described above, in the case where a voltage of not less than 7 V is applied between the electrodes for applying a lateral electric field to the liquid crystal layer 30.

With the arrangement, it is possible to (i) achieve a practical light transmittance of more than 60% as described above and (ii) use a liquid crystal material having a high dielectric anisotropy Δε.

It is consequently possible to reduce a liquid crystal viscosity. This makes it possible to complete the falling response substantially within a single frame even if the p-type liquid crystal material is variously replaced with another p-type liquid crystal material. As such, it is possible to reliably achieve a high-speed response.

A viewing angle characteristic is impaired when the panel phase difference Δnd is increased. Thus, in practice, it is more desirable to increase Δε to an extent where reliability is not damaged than to increase Δn. According to the present invention, it is possible to improve a light transmittance and a response speed while maintaining a viewing angle characteristic and reliability.

In the Examples, the voltage applied to each of the common electrodes 14 and 71 was 0 V. The present invention is, however, not limited to this. Further, according to the present invention, the voltages applied to the pixel electrodes and the common electrode(s) are not particularly limited. Therefore, any combination of voltages can be used, provided that the voltages applied to the respective electrodes for applying a lateral electric field to the liquid crystal layer 30 are different from each other by not less than 7 V between the respective electrodes.

In addition, according to the present invention, a comb electrode, whether it is a pixel electrode or a common electrode, can have a V-shape or a zigzag shape.

According to the present invention, a p-type nematic liquid crystal material can, for example, be used as a p-type liquid crystal material. The present invention is, however, not limited to this.

As described earlier, each of the liquid crystal panel 2 and the liquid crystal display device 1 achieves a bend orientation of a liquid crystal material by causing the liquid crystal cell 5 to have an electric field strength distribution in response to an applied electric field. In the present embodiment, it is preferable to use a liquid crystal material having a high refractive index anisotropy Δn or a liquid crystal material having a high dielectric anisotropy Δε. Examples of such a p-type liquid crystal material encompass CN (cyano) liquid crystal materials (chiral nematic liquid crystal materials) and F (fluorine) liquid crystal materials.

As described above, the liquid crystal panel of the present invention includes: a liquid crystal material sandwiched between a pair of substrates; and a plurality of electrodes which include comb electrodes and which cause an electric field parallel to substrate surfaces to be applied to the liquid crystal material, the liquid crystal material including a p-type liquid crystal material, the p-type liquid crystal material being oriented in a direction perpendicular to the substrate surfaces while no electric field is applied.

The liquid crystal panel is arranged such that: the comb electrodes each having an electrode width of not more than 5 µm and an electrode spacing of not more than 15 µm, while the liquid crystal panel is being driven, voltages applied to the plurality of electrodes, which cause the electric field parallel to the substrate surfaces to be applied to the liquid crystal material, being different from each other by not less than 7 V between the plurality of electrodes, and the p-type liquid crystal material having a dielectric anisotropy Δε and a refractive index anisotropy Δn whose product (Δε·Δn) falls in a range from 0.9 to 2.5.

The liquid crystal panel may have, for example, an arrangement (I) in which: the plurality of electrodes are pixel electrodes and a common electrode which are provided to one of the pair of substrates; and at least the pixel electrodes out of the pixel electrodes and the common electrode are the comb electrodes.

The liquid crystal panel described in (I) above has an extremely simple structure, and can thus be produced without any significant design variation. As such, the liquid crystal panel can be produced inexpensively.

The liquid crystal panel having the arrangement (I) may preferably be arranged such that a common electrode is further provided to the other of the pair of substrates so as to cover an entire display region.

According to the above arrangement, lines of electric force present in the vicinity of the other of the pair of substrates are deformed due to the common electrode provided to the other of the pair of substrates. As a result, p-type liquid crystal molecules present in the vicinity of the second substrate are sharply sloped toward a horizontal direction. It is consequently possible in such a liquid crystal panel 2 to rotate the p-type liquid crystal molecules present even in the vicinity of the surface of the other of the pair of substrates. Hence, it is possible to further improve the light transmittance, with respect to a given driving voltage, as compared to a case in which no common electrode is provided to the other of the pair of substrates.

Instead of the arrangement (I), the liquid crystal panel may have, for example, an arrangement (II) in which: the plurality of electrodes are at least two pixel electrodes provided to one of the pair of substrates; said at least two pixel electrodes are the comb electrodes; voltages, whose phases are opposite to each other, are applied to respective any adjacent ones of said at least two pixel electrodes, while the liquid crystal panel is being driven; and a common electrode is provided to at least one of the pair of substrates.

In the liquid crystal panel having the arrangement (II), a voltage, which is twice as high as an effective signal voltage can be applied between the pixel electrodes adjacent to each other by, as described above, applying to the pixel electrodes adjacent to each other voltages which have respective opposite phases. As such, it is possible to carry out a high-voltage driving without use of a driver having a high breakdown voltage. It follows that the liquid crystal panel can be produced inexpensively.

The liquid crystal panel having the arrangement (II) may be arranged such that the one of the pair of substrates includes a plurality of data lines per gate line; switching elements are provided in respective regions where the plurality of data lines intersect with gate lines; said any adjacent ones of said at least two pixel electrodes are connected to respective adjacent ones of the switching elements along a corresponding one of the gate lines; and each pixel includes (i) at least two switching elements adjacent to each other along a corresponding gate line and (ii) at least two pixel electrodes connected to said respective at least two switching elements.

According to the above arrangement, it is possible to (i) drive the pixel electrodes by applying different signal voltages and therefore (ii) easily provide a liquid crystal panel which can, as described above, carry out a high-voltage driving without use of a driver having a high withstand voltage.

The present invention is not limited to the description of the embodiments above, but may be altered in various ways by a skilled person within the scope of the claims. Any embodiment based on a proper combination of technical means altered as appropriate within the scope of the claims is also encompassed in the technical scope of the present invention.

### Industrial Applicability

Each of the liquid crystal panel and the liquid crystal display device of the present invention requires no initial bend transition operation, uses a practical driving voltage, and not only achieves a high light transmittance but also achieves (i) a wide viewing angle characteristic equivalent to a viewing angle characteristic achieved in the MVA mode or the IPS mode, (ii) a high-speed response equivalent or even superior to a response achieved in the OCB mode, and (iii) a high contrast. As such, the liquid crystal panel and the liquid crystal display device of the present invention are particularly suitable for, e.g., a public bulletin board for outdoor use, a mobile telephone, and a mobile device such as a PDA.

### Reference Signs List

- 1: liquid crystal display device
- 2: liquid crystal panel
- 3: driving circuit
- 4: backlight
- 5: liquid crystal cell
- 10: substrate
- 11: glass substrate
- 12: alignment film
- 13: pixel electrode (electrode)
- 13A: pixel electrode (electrode)
- 13B: pixel electrode (electrode)
- 14: common electrode (electrode)
- 20: substrate
- 21: glass substrate
- 22: alignment film
- 30: liquid crystal layer
- 31: p-type liquid crystal molecule
- 33: spacer
- 34: sealing agent
- 35: polarizing plate
- 36: polarizing plate
- 37: wave plate
- 38: wave plate
- 40: substrate
- 41: dielectric layer
- 50: substrate
- 60: substrate
- 70: substrate
- 71: common electrode (electrode)
- 72: dielectric layer
- 81: TFT (switching element)
- 82: TFT (switching element)
- GL: gate line
- SL: data line
- SLA: data line
- SLB: data line
- CL: capacitor line

## Claims

1. A liquid crystal panel, comprising:
a liquid crystal material sandwiched between a pair of substrates; and a plurality of electrodes which include comb electrodes and which cause an electric field parallel to substrate surfaces to be applied to the liquid crystal material, the liquid crystal material including a p-type liquid crystal material, the p-type liquid crystal material being oriented in a direction perpendicular to the substrate surfaces while no electric field is applied,
the comb electrodes each having an electrode width of not more than 5 µm and an electrode spacing of not more than 15 µm,
while the liquid crystal panel is being driven, voltages applied to the plurality of electrodes, which cause the electric field parallel to the substrate surfaces to be applied to the liquid crystal material, being different from each other by not less than 7 V between the plurality of electrodes,
the p-type liquid crystal material having a dielectric anisotropy Δε and a refractive index anisotropy Δn whose product falls in a range from 0.9 to 2.5.

2. The liquid crystal panel according to claim 1, wherein:
the plurality of electrodes are pixel electrodes and a common electrode which are provided to one of the pair of substrates; and
at least the pixel electrodes out of the pixel electrodes and the common electrode are the comb electrodes.

3. The liquid crystal panel according to claim 2, wherein a common electrode is further provided to the other of the pair of substrates so as to cover an entire display region.

4. The liquid crystal panel according to claim 1, wherein:
the plurality of electrodes are at least two pixel electrodes provided to one of the pair of substrates;
said at least two pixel electrodes are the comb electrodes;
voltages, whose phases are opposite to each other, are applied to respective any adjacent ones of said at least two pixel electrodes, while the liquid crystal panel is being driven; and
a common electrode is provided to at least one of the pair of substrates.

5. The liquid crystal panel according to claim 4, wherein:
the one of the pair of substrates includes a plurality of data lines per gate line;
switching elements are provided in respective regions where the plurality of data lines intersect with gate lines;
said any adjacent ones of said at least two pixel electrodes are connected to respective adjacent ones of the switching elements along a corresponding one of the gate lines; and
each pixel includes (i) at least two switching elements adjacent to each other along a corresponding gate line and (ii) at least two pixel electrodes connected to said respective at least two switching elements.

6. A liquid crystal display device comprising a liquid crystal panel recited in any one of claims 1 through 5.
